(19) Europäisches Patentamt
European Patent Office
Office européen des brevets

(11) **EP 2 755 751 B1**

(12) **FASCICULE DE BREVET EUROPEEN**

(45) Date de publication et mention
de la délivrance du brevet:
**15.05.2019 Bulletin 2019/20**

(21) Numéro de dépôt: **12775729.2**

(22) Date de dépôt: **17.09.2012**

(51) Int Cl.:
*B01J 20/08* (2006.01)   *B01J 20/12* (2006.01)
*B01J 20/16* (2006.01)   *B01J 20/18* (2006.01)
*B01J 20/283* (2006.01)   *B01J 20/284* (2006.01)
*B01J 20/28* (2006.01)   *B01J 20/30* (2006.01)
*B01D 15/18* (2006.01)   *B01D 15/22* (2006.01)
*B01D 53/04* (2006.01)   *G01N 30/60* (2006.01)
*G01N 30/52* (2006.01)

(86) Numéro de dépôt international:
**PCT/FR2012/000367**

(87) Numéro de publication internationale:
**WO 2013/064754 (10.05.2013 Gazette 2013/19)**

(54) **GARNISSAGE POUR UNE COLONNE CHROMATOGRAPHIQUE ET PROCÉDÉ DE RÉALISATION**

FÜLLUNG FÜR EINE CHROMATOGRAPHIESÄULE SOWIE HERSTELLUNGSVERFAHREN

PACKING FOR A CHROMATOGRAPHY COLUMN AND PRODUCTION PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2011 FR 1102790**

(43) Date de publication de la demande:
**23.07.2014 Bulletin 2014/30**

(73) Titulaire: **Parmentier, François**
**38400 Saint Martin d'Héres (FR)**

(72) Inventeur: **Parmentier, François**
**38400 Saint Martin d'Héres (FR)**

(74) Mandataire: **Regimbeau**
**87 rue de Sèze**
**69477 Lyon Cedex 06 (FR)**

(56) Documents cités:
WO-A1-01/47634       WO-A1-95/28279
FR-A1- 2 957 276      US-A- 5 234 594
US-A1- 2006 090 649

• FRANÇOISE EHRBURGER-DOLLE ET AL: "Use of N2, Ar and CO2 adsorption for the determination of microporosity and surface fractal dimension of carbon blacks and silicas", PURE AND APPLIED CHEMISTRY, vol. 65, no. 10, 1 October 1993 (1993-10-01), XP055186481, ISSN: 0033-4545, DOI: 10.1351/pac199365102223

Description

## DOMAINE DE L'INVENTION

La présente invention concerne un garnissage pour une colonne chromatographique, ainsi qu'un procédé pour la réalisation d'un tel garnissage.

## ARRIERE PLAN DE L'INVENTION

Le contact intime entre deux phases comme un gaz et un liquide pour promouvoir leur interaction chimique ou physique est une opération importante du génie chimique.

Pour promouvoir les phénomènes interfaciaux à la surface de contact entre ces deux phases, on essaie d'augmenter cette surface de contact autant que possible, et d'augmenter les effets de mélange à leur proximité.

On utilise couramment dans ce but des lits de fines particules solides, au travers desquels s'écoule un fluide avec lequel elles interagissent.

Ces lits, nommés lits de particules ou encore garnissages, offrent de grandes surfaces d'échanges du fait de la petite taille des particules qui les constituent, et du grand état de division du fluide qui les traverse.

Ces phénomènes favorisent l'accomplissement rapide des processus de transfert de matière, des réactions chimiques ou de tous autres phénomènes liés à une diffusion.

Leurs applications couvrent en particulier les domaines de la chromatographie liquide et gaz, analytique et préparative.

La chromatographie est une technique particulière, qui à ses avantages et contraintes propres et se différencie par là même des autres techniques apparentées, comme l'adsorption et la catalyse hétérogène, par la mise en oeuvre de garnissages solides et de fluides.

En adsorption on cherche à retenir un composé d'un effluent fluide sur la surface duquel il est adsorbé par l'intermédiaire d'un isotherme, ou sur laquelle il réagit. On cherche à purifier le fluide. On a besoin de hautes surfaces spécifiques. Il faut des lits de haute capacité. L'efficacité du garnissage n'est pas critique (nombre de plateaux théoriques) et l'on préfère utiliser des lits de granulés de 1 à 2 mm de diamètre. En effet l'efficacité n'a qu'une influence négligeable sur le dimensionnement du lit dans la mesure où elle ne jouera que sur la raideur du front de percolation, qui est bonne dès que l'on atteint 20 plateaux théoriques environ. Il faut ensuite régénérer l'adsorbant par une combinaison de moyens, température, réaction chimique, qui élimine les impuretés adsorbées ou combinées . Le fonctionnement est donc séquentiel mais les temps de cycle se chiffrent en jours ou en semaines. On dimensionne sur la masse du lit. Les pertes de charge sont faibles.

En catalyse, on cherche à effectuer une réaction chimique sur la surface du solide. On désire que les réactifs restent un temps optimal en contact avec le solide. Il s'agit là encore de forces d'adsorption et de réactions chimiques. On est intéressé par des critères de temps de séjour. Le raisonnement en nombre de plateaux théoriques est inopérant. La régularité du garnissage est un facteur parmi d'autres et est secondaire devant la sélectivité catalytique. On ne cherche pas à séparer des molécules. Les pertes de charges sont faibles.

En chromatographie, on sépare plusieurs composants présents dans une charge fluide admise séquentiellement selon un intervalle de temps court se comptant en minutes, en la propageant d'un point d'entrée à un point de sortie d'une colonne de solide sous l'effet d'un fluide éluant. La séparation obtenue peut l'être par une très large variété de forces qui rentrent en compétition avec l'effet moteur de l'éluant, partage, adsorption, interactions stériques, interactions ioniques, etc... Cette méthode offre un haut pouvoir séparateur, chaque composant se comportant de façon différente. Pour mettre en valeur ce pouvoir séparateur, il faut que la colonne présente un nombre de plateaux théoriques élevé, par exemple 1000. Cela signifie aussi que les résistances diffusionnelles doivent être minimisées, et donc que les distances de diffusion soient courtes, et que la colonne doit être longue. Ces facteurs combinés font que la chromatographie est une technique qui réclame une régularité excellente de l'écoulement et donc du garnissage, et une faible dimension caractéristique de celui ci, conduisant à des pertes de charges qui deviennent rapidement critiques avec des solides particulaires. Ce sont ces problèmes qu'il faut résoudre en chromatographie.

D'autre part, la chromatographie préparative réalisable de façon pratique et simple est l'un des problèmes non résolus essentiel du génie chimique.

Dans l'art antérieur, on utilise essentiellement dans ce but des dispositifs en colonnes discontinues de fort diamètre et des dispositifs dits de Lit Mobile Simulé. dans le premier cas les lits de particules fines utilisés obligent à travailler avec des pertes de charge élevées rendant le dispositif complexe et coûteux. Dans le second cas on simule un déplacement d'un garnissage solide en le séquençant en un train de lits fixes individuels de faibles longueurs , lits individuels aux bornes desquels on déplace le point d'alimentation et les points de soutirage des produits. Ces dispositifs ont une efficacité modérée et sont de facto essentiellement discontinus dans leur gestion.

On a proposé dans la littérature des garnissages pour la chromatographie constituées d'un grand nombre de canaux capillaires jointifs fonctionnant en parallèles (Express gas chromatography on multicapillary columns and its potential, V.N Sidelnikov et al, Catalysis in Industry 2012, vol 2, N° 3, pp 206, 216). Ces différents capillaires fonctionnent indépendamment les uns des autres car leur parois sont pleines et non poreuses. En particulier leurs diamètres et leur taux de remplissage par la phase stationnaire sont toujours légèrement différents les uns des autres. Cette indépendance de fonctionnement provoque une forte perte d'efficacité du fait des vitesses différentes d'écoulement du fluide éluant dans des capillaires de diamètre variable. Du fait de ce défaut, ces dispositifs n'ont pas connu de développement significatif.

Le brevet US 5 332 480 de Datta et Beardsley, décrit une technique d'électrophorèse sur des capillaires individuels disposés annulairement et rotatifs. Cependant cet arrangement n'a pour but que de refroidir aisément les capillaires qui sont disposés éloignés les un des autres pour permettre la circulation d'un fluide de refroidissement à leur périphérie. La productivité de l'appareil est très faible. En effet, les capillaires doivent êtres éloignés les uns des autres pour être refroidis, sont relativement peu nombreux, et la fraction de la section libre au passage du fluide procédé devient très faible. Les capillaires ne comportent aucune phase stationnaire indispensable à l'obtention d'une séparation chromatographique. Tel quel le dispositif n'est pas utilisable en chromatographie. On notera de plus que le diamètre optimal des capillaires revendiqués est compris entre 100 et 250 micromètres et n'est pas adapté à une haute productivité en chromatographie en phase liquide pour laquelle on préférera un diamètre plus faible. Ce point illustre bien la différence de structure fondamentale entre un procédé d'électrophorèse basé sur un champ électrique externe appliqué pour lequel le diamètre du capillaire n'est pas critique pour l'efficacité de la séparation, et la chromatographie de partage pour laquelle l'efficacité dépend étroitement des distance diffusives entre phases stationnaire et mobile. Il n'y a pas équivalence évidente entre les deux méthodes

Le brevet US 4,657,742 de Beaver P. propose une alternative à ces garnissages particuliers constituée d'un tube garni de fibres alignées pouvant être poreuses et creuses. Un inconvénient de ces garnissages est que le fluide éluant s'écoule aussi bien à l'intérieur des fibres creuses qu'à l'extérieur de celles-ci, dans les espaces vides laissés entre leur empilement. Le fluide éluant s'écoulant à deux vitesses très différentes à l'intérieur des fibres creuses et à leur périphérie dans les interstices séparant les fibres de section circulaire, il en résulte une perte d'efficacité. Un autre inconvénient de ce dispositif est que les parois des fibres creuses doivent être suffisamment épaisses pour être manipulées et tassées et résister aux tensions mécaniques induites par leur empilement. Ceci signifie que l'équilibrage diffusionnel entre les fibres adjacentes est lent, et que le garnissage est peu efficace. Un autre inconvénient de ce dispositif est qu'il est difficile à appliquer à des faisceaux de fibres de large diamètre car la stabilité mécanique du garnissage serait difficile à assurer.

Le brevet US 4,957,620 de Cussler E. décrit l'utilisation de faisceaux de fibres creuses polymériques pour une utilisation comme colonne chromatographique. L'assemblage souffre des mêmes inconvénients que précédemment : l'épaisseur de la paroi des fibres doit être élevée en comparaison de celui du canal central afin d'assurer à ces fibres une tenue mécanique suffisante permettant de les manipuler et de les assembler. Ceci a pour conséquence que les transferts de matière par diffusion entre le matériau des parois et le fluide éluant sont lents. Le fluide éluant s'écoule à deux vitesses très différentes à l'intérieur des fibres creuses et à leur périphérie. Là aussi, la stabilisation de garnissages de grand diamètre est difficile du fait du manque de liens forts entre des fibres adjacentes.

Le brevet US 4,818,264 décrit l'utilisation de faisceaux de colonnes capillaires en verre ou en silice pour effectuer de la chromatographie multicapillaire gaz. Ce système présente le grave inconvénient que les capillaires se comportent indépendamment les uns des autres. De ce fait, il est difficile d'obtenir un comportement identique des différents conduits, et une attention minutieuse et délicate doit être apportée à la fabrication de conduits identiques les uns aux autres.

La demande de brevet US 2005/0139536 de Belov Y.P. décrit une colonne chromatographique dont les conduits sont recouverts de différentes épaisseurs de phase stationnaire de façon à compenser les inégalités hydrodynamiques entre les différents conduits. Ce travail exemplifie la difficulté d'obtenir de bonnes performances d'une colonne multicapillaire composée de conduits individualisés ne communiquant pas par diffusion.

Les publications de Nishihara H. « Ordered macroporous silica by ice templating », Chemistry of Materials, 28 février 2005, pages 683-689 et Mukai S. R. « Formation of monolithic silica gel microhoneycomb (SMH's) using pseudo steady state growth of microstructural ice crystals » Chemical Communications, 4 mars 2004, pages 874-875 décrivent une voie potentielle de réalisation de structures multicapillaires en silice. Les documents font référence à une méthode de fabrication de microstructures de silice poreuse ordonnée, ayant la forme de nids d'abeille de 3,6 à 40 $\mu$m de diamètre. La méthode consiste à faire croître de façon directionnelle des cristaux de glace dans des gels de silice de faible cohésion, et à évaporer un solvant par lyophilisation.

Cependant, le procédé décrit ne fonctionne qu'avec des gels de silice de faible cohésion, c'est-à-dire faiblement concentrés en silice. Les structures obtenues sont donc très légères, à savoir d'une densité de l'ordre de 0,12 g/cm$^3$ d'après les auteurs de ces publications. Le volume relatif des capillaires est élevé. Comme tels, ils ne seront pas performants en chromatographie liquide, pour laquelle on recherche des garnissages denses ayant une forte capacité de rétention. D'autre part des garnissages aussi légers sont mécaniquement fragiles.

Par ailleurs, l'examen de toutes les photographies des deux articles montre que les diamètres des conduits diffèrent entre eux par un facteur 10 environ et que les diamètres des conduits sont très fluctuants et irréguliers sur leur longueur. Ces conduits ont un environnement et une morphologie très variable, leur section pouvant être carrée, pentagonale, hexagonale, etc. Ces irrégularités font que de tels garnissages sont inefficaces en chromatographie analytique de haute performance, où une homogénéité parfaite du garnissage est requise.

Enfin, les garnissages décris dans ces articles sont obtenus dans une gamme restreinte de diamètres de 3,6 à 42 $\mu$m. Or le domaine s'étendant au dessous de 2 $\mu$m est particulièrement intéressant pour une application en Chromatographie Liquide Haute Pression (HPLC), et le domaine s'étendant au dessus de 50 $\mu$m est particulièrement intéressant pour une application en chromatographie gaz.

Le brevet US 6,210,570 de Holloway R. décrit un garnissage monolithique en silice poreuse pour la chromatographie. De tels garnissages sont constitués de pores plus ou moins sphériques et ménageant des passages tortueux au travers du garnissage. Ces passages sont tortueux et un fluide les traversant rencontre de nombreux obstacles, les pores et le solide étant répartis spatialement de façon aléatoire dans le garnissage. Ceci constitue une différence majeure avec un écoulement dans un tube capillaire vide, ou le fluide ne rencontre aucun obstacle microscopique sur un trajet rectiligne et optimal. Ils présentent de fait une perte de charge inférieure à celle d'un garnissage particulaire, mais supérieure à celle d'un capillaire présentant la même efficacité de séparation pour une analyse donnée, et ont une impédance de séparation intermédiaire entre ceux ci. Ils présentent l'avantage de permettre un écoulement macroscopiquement uniforme du fluide éluant au travers du garnissage du fait de leur structure monolithique, au contraire de l'empilement de tubes capillaires décrit dans le brevet US 4,657,742

Les publications suivantes : N, Ishizuka , Designing monolithic double pore silica for high speed liquid chromatography, Journal of Chromatography A, 797 (1998), 133-137, K Nakanishi, Phase séparation in silica sol-gel system containing polyacrylic acid, Journal of non crystalline Solids 139 (1992, 1-13 and 14-24, K. Nakanishi, Phase séparation in Gelling Silica-Organic Polymer Solution: Systems Containing Poly(sodium styrenesulfonate), J. Am. Ceram. Soc. 74 (10) 2518-2530-30 (1991) traitent du même sujet que le brevet Holloway. Il s'agit de réaliser un garnissage monolithique en silice comprenant deux familles de pores, d'une part des macropores interconnectés par où peut s'écouler un liquide relativement librement, et d'autre part une famille de mésopores ou de micropores créant de la surface spécifique, et donc de l'activité vis-à-vis d'un échange de matière.

Le Brevet PCT WO01/47637 A de Faber et al décrit un monolithe d'alumine $\gamma$ (gamma) et de zéolithe destiné à la catalyse. L'application à la chromatographie n'est pas mentionnée. La méthode de fabrication de ce monolithe comprend un frittage à 850° C ou la boehmite devient de l'alumine gamma, perdant ainsi ses qualités chromatographique. De plus ce monolithe présente un diamètre de canal supérieur à 1 mm.

Le Brevet US publication 2006/0090649 de Wei Liu présente un monolithe de céramique destiné à des applications en tant que membrane minérale et non en chromatographie. Le seul moyen connu de préparer ces monolithes dans l'état de l'art fait intervenir un frittage à haute température qui fait perdre au matériau ses qualités chromatographiques. Le diamètre revendiqué pour les canaux est supérieur à 0.5 mm.

Le Brevet PCT WO 95/28279 de Purushottam et al présente un monolithe dont le matériau de base est du charbon actif (carbon activated honeycomb. dans le titre). En effet il est clairement mentionné p17 ligne 11 et 12 que la structure est constituée d'un continuum ou squelette de carbone. Un tiers corps solide minéral peut être ajouté dans le carbone, mais celui-ci est en volume trop faible ou sous une forme telle qu'il ne constitue pas un monolithe ou la base de celui-ci. Le procédé décrit ne permet pas l'obtention d'un monolithe (littéralement « une seule pierre ») basé sur un aluminosilicate. En particulier ce n'est pas un procédé sol gel.

Le Brevet Français N°2957276 ne mentionne pas la proportion de micropores de diamètre inférieur à 0,3 nm présentes dans le garnissage. Or ces pores diminuent la capacité du garnissage pour une application chromatographique. Ils provoquent une très importante diminution du flux de diffusion entre les canaux adjacents, nuisant ainsi à l'efficacité d'une colonne chromatographique les utilisant. Ce Brevet ne mentionne pas les combinaisons d'alumine et de silice.

Le Brevet US 5234594 présente un filtre constitué de canaux rectilignes contigus dans une matrice de verre. Cependant cette matrice n'est pas poreuse. Il s'agit de verre plein. Suivant la présente invention, le matériau séparant les canaux doit être poreux. pour que les différences de comportement entre les canaux adjacent s'équilibrent par diffusion et obtenir plus d'efficacité chromatographique. Ce caractère poreux de la paroi des canaux ressort sans ambiguïté des dessins 1 et 2 et de la formulation de la revendication 1.

Le Brevet US N° 5864743 de Tuchinsky et al décrit un procédé de réalisation de garnissages multicapillaire en alumine caractérisé en ce que l'on assemble une couche d'alumine pulvérulente immergée dans un liant autour d'un élément constituée par du carbone pulvérulent immergé dans un autre liant, en que l'on joint de tels éléments en faisceau, en ce qu'on les extrude à une ou deux reprises, en ce que l'on élimine les liants, en ce que l'on brule le carbone et en ce que l'on provoque un frittage de l'alumine ainsi mise en forme à haute température. Pour être pratiquement possible un frittage doit être effectué à une température pas trop éloignée, ou de l'ordre de celle du point de fusion du matériau, soit 2050 °C pour l'alumine, ou de celle de son point d'ébullition, 3000 °C pour l'alumine. Cela signifie en pratique que l'alumine obtenue aura subi une déshydratation profonde et une transformation allotropique après avoir subi la température nécessitée par un frittage, et sera de l'alumine alpha, de faible surface spécifique, et non de l'alumine activée de haute surface spécifique, seule intéressante pour des usages d'adsorption ou pour la chromatographie,. La porosité, la surface spécifique et le volume poreux en auront été profondément diminués quelle que soit la température de frittage. De tels garnissages ne présentent qu'un intérêt marginal pour le génie chimique. D'autre part les étapes d'extrusions sont extrêmement nuisibles à la qualité et à la régularité du produit final . Les fibres périphériques du faisceau extrudé vont subir des contraintes, cisaillements et déformations extrêmement différentes de celles situées en son centre, et leur morphologie s'en trouvera affectée. Ceci sera d'autant plus critique que les liants présenteront un comportement non newtonien. Enfin le frittage lui-même est une opération très pénalisante sur le plan dimensionnel, particulièrement pour les pièces de grandes dimensions. Lors du frittage, d'importants retraits et changements dimensionnels ont lieu, difficiles à maitriser, qui sont des causes majeures d'irrégularités et de défauts dans le garnissage final.

La demande de brevet US 2005/0023204 de Nakanishi et al divulgue un garnissage pour une colonne chromatographique comprenant de l'alumine activée et vitrifiée, ainsi que de la silice amorphe comprenant des conduits capillaires rectilignes et parallèles entre eux d'une longueur de 100 mm, caractérisé en ce que les conduits présentent une section uniforme les uns par rapport aux autres, la section de chaque conduit est régulière sur toute sa longueur, les conduits traversent le matériau de part en part, les conduits présentent un diamètre inférieur à 0,25 mm, et les conduits supportent un tiers corps solide en silice.

Cependant la grande majorité des séparations se font encore sur des lits de particules, plus faciles à réaliser.

Il s'avère le besoin de proposer un produit présentant les avantages en terme de sûreté et de facilité de fabrication des garnissages particulaires, permettant un écoulement uniforme microscopiquement et macroscopiquement du fluide éluant dans le lit, et conservant les avantages des colonnes capillaires.

## BREVE DESCRIPTION DE L'INVENTION

A cet effet, l'invention propose un garnissage pour une colonne chromatographique, comprenant un matériau poreux monolithique basé sur un aluminosilicate et comprenant des conduits capillaires substantiellement rectilignes et parallèles entre eux, caractérisé en ce que :

- lesdits conduits présentent une section substantiellement uniforme les uns par rapport aux autres, c'est-à-dire que le diamètre moyen d'un conduit ne diffère pas en moyenne de plus de 30% de la moyenne des diamètres des conduits,
- la section de chaque conduit est régulière sur toute sa longueur, le diamètre d'un conduit ne variant pas de plus d'un facteur 2 entre les zones les plus étroites et les zones les plus larges,
- lesdits conduits traversent le matériau de part en part,
- lesdits conduits présentent un diamètre inférieur à 0,25 mm,
- le volume des micropores inférieures à 0,3 nm est inférieur à 50% du volume poreux total du matériau mesuré en excluant le volume des conduits.

Avantageusement pour ce matériau poreux monolithique l'aluminosilicate est une argile.

Avantageusement la longueur totale et cumulative selon laquelle les conduits s'étendent suivant une direction préférentielle d'écoulement d'un fluide est supérieure ou égale à 10 mm.

Par longueur totale et cumulative on entend la longueur totale recouverte par les canaux dans la direction du flux d'éluant.

Avantageusement la longueur des conduits est supérieure ou égale à 10 mm, de préférence supérieure à 20 mm, encore préférentiellement supérieure à 50 mm.

Par « basé sur » on entend que le squelette continu et rigide du monolithe est essentiellement constitué de silice amorphe ou d'alumine activée, ou de l'aluminosilicate, éventuellement modifiés en surface.

Par « section substantiellement uniforme » on entend ici que les diamètres des différents conduits sont proches les uns des autres, c'est-à-dire en particulier que le diamètre moyen d'un conduit ne diffère pas en moyenne de plus de 30% de la moyenne des diamètres des conduits.

L'écart type du diamètre des conduits est inférieur à 30% de la moyenne de celui-ci, de préférence inférieur à 5% de la moyenne de celui ci.

Par « section régulière », on entend que les conduits présentent respectivement une section substantiellement constante sur toute leur longueur, c'est-à-dire que le diamètre d'un conduit ne varie pas de plus d'un facteur 2 entre les zones les plus étroites et les zones les plus larges.

Le matériau présente avantageusement une densité supérieure à 0,12 kg/litre.

De manière particulièrement avantageuse, le matériau présente un volume relatif des conduits capillaires inférieur à 90%.

L'épaisseur de la paroi entre deux conduits adjacents, dans sa partie la plus fine, est avantageusement inférieure à la moitié de leur diamètre.

Avantageusement le matériau comporte des conduits de diamètre inférieurs à 2mm, et plus préférentiellement inférieurs à 0,25 mm, de préférence inférieurs à 0,1 mm.

Selon un mode de réalisation de l'invention, les conduits capillaires présentent un diamètre compris entre 0,1 et 1,5 micromètre.

Selon un autre mode de réalisation de l'invention, les conduits capillaires présentent un diamètre ou une taille transversale caractéristique supérieure à 50 $\mu$m.

Le matériau est avantageusement constitué de silice amorphe modifiée ou non en surface par un silane ou d'une alumine activée $\chi$ ou $\eta$ modifiée ou non en surface.

Le matériau est avantageusement constitué d'une alumine $\gamma$, $\kappa$ ou $\theta$ modifiée ou non en surface.

Suivant une voie de réalisation de l'invention ce matériau contient ou supporte un tiers corps solide.

En particulier ce tiers corps solide peut être une zéolithe.

Le matériau monolithique présente avantageusement une forme allongée, se caractérisant par une longueur (i.e. la longueur des conduits capillaires) supérieure à sa dimension dans une direction perpendiculaire aux conduits.

Est également décrite une colonne chromatographique dont le garnissage comprend au moins un matériau poreux monolithique tel que décrit ci-dessus.

De manière avantageuse, le monolithe est suffisamment long pour qu'un unique monolithe soit suffisant pour une application en chromatographie.

Eventuellement, on pourra empiler plusieurs monolithes.

Un autre objet de l'invention est un appareil de chromatographie annulaire continue axiale dans lequel le garnissage comprend au moins un matériau poreux monolithique tel que décrit ci-dessus.

Un autre objet de l'invention est un appareil de chromatographie annulaire continue radiale dans lequel le garnissage comprend au moins un matériau poreux monolithique tel que décrit ci-dessus.

L'invention porte également sur un procédé de fabrication d'un tel garnissage comprenant un matériau poreux monolithique basé sur un aluminosilicate et comprenant des conduits capillaires rectilignes et parallèles entre eux, caractérisé en ce qu'il comprend les étapes de :

- fourniture d'un faisceau de fibres dites précurseurs des conduits dont le diamètre est égal à celui des conduits capillaires,
- formation d'une matrice autour des fibres, basée sur un aluminosilicate, le volume des micropores inférieures à 0,3 nm étant inférieur à 50% du volume poreux total du matériau mesuré en excluant le volume des conduits,

Suivant une voie de réalisation de l'invention l'élimination des fibres est réalisée au travers des lumières ou interstices laissés libres entre les fibres du faisceau juxtaposées.

Suivant une voie de réalisation préférentielle de ce procédé la formation d'une matrice poreuse de solide minéral autour des fibres est assurée par un procédé sol gel.

Avantageusement le solide minéral poreux est constitué de silice amorphe ou d'alumine activée ou d'une de leurs combinaisons comme un aluminosilicate

Avantageusement le solide minéral poreux est constitué d'oxyde de zirconium ou d'oxyde de titane.

Eventuellement, les fibres précurseurs des conduits comprennent une couche ablative d'un matériau d'enrobage éliminé lors d'une première étape du traitement d'élimination des fibres.

Avantageusement le solide minéral poreux est renforcé par dépôt de silice à la surface des particules le constituant avant séchage.

Selon une forme particulière, les fibres précurseurs des conduits comprenant éventuellement leur enrobage de matériau ablatif sont revêtues d'un espaceur préalablement à la formation du faisceau de façon à assurer une épaisseur minimale du monolithe entre deux conduits adjacents.

Selon un mode de réalisation de ce procédé, les fibres sont constituées d'un polymère hydrolysable, les fibres sont assemblées en faisceau, le faisceau est immergé dans une solution précurseur d'un gel de silice, solution dont on provoque le gel autour des fibres, et les fibres sont éliminées par hydrolyse en espèces solubles de faible poids moléculaire.

Par « solution précurseur d'un gel de silice », on entend un liquide de composition telle que, par son évolution dans les conditions du procédé de fabrication, il conduise à un gel de silice.

Selon un autre mode de réalisation de ce procédé, les fibres précurseurs des conduits sont des fils métalliques à bas point de fusion recouverts d'un espaceur, assemblés en un faisceau, le faisceau est immergé dans une solution précurseur d'un gel de silice ou d'alumine activée, solution dont on provoque le gel autour des fils, et les fibres sont éliminées par fusion et drainage du liquide fondu hors du matériau.

Lorsque le matériau est de la silice amorphe, cette silice amorphe peut être renforcée par dépôt de silice à la surface des particules la constituant avant son séchage.

Selon un mode de réalisation de ce procédé, la matrice poreuse de silice amorphe présente une proportion élevée de macropores permettant la circulation d'un fluide dans le monolithe. Avantageusement cette proportion est supérieure à 40%.

De manière alternative l'invention propose que le procédé de réalisation du garnissage comprenne les étapes de :

- fourniture d'un faisceau de fibres dites précurseurs des conduits dont le diamètre est égal à celui des conduits capillaires,
- formation d'une matrice de silicone réticulé comportant une charge d'un aluminosilicate autour des fibres
- pyrolyse du silicone de façon à laisser un résidu de silice amorphe liant les particules de la charge.

**BREVE DESCRIPTION DES DESSINS**

D'autres caractéristiques et avantages de l'invention ressortiront de la description détaillée qui va suivre, en référence aux dessins annexés sur lesquels :

- la figure 1 est une vue en coupe d'un garnissage multicapillaire cylindrique pour la chromatographie selon l'invention suivant une direction perpendiculaire à son grand axe ;
- la figure 2 est une vue de dessus d'une face du garnissage cylindrique de la figure 1 ;
- la figure 3 est une vue en coupe d'un film d'un élastomère silicone dans lequel sont gravés des canaux destinés, après empilement ou enroulement, à constituer les conduits capillaires ;
- les figures 4, 5 et 6 sont des schémas de principe d'un chromatographe annulaire continu utilisant un garnissage multicapillaire selon l'invention ;
- la figure 7 est une vue en coupe d'un garnissage pour la chromatographie suivant l'invention suivant une direction parallèle à son grand axe dans lequel les canaux sont immergés dans une masse monolithique poreuse et sont empilés et juxtaposés.
- la figure 8 est une vue en coupe suivant une direction perpendiculaire à son grand axe d'un exemple d'une fibre précurseur d'un garnissage pour la chromatographie suivant l'invention
- la figure 9 est une vue en coupe suivant une direction perpendiculaire à son grand axe d'un empilement de fibres précurseurs d'un garnissage pour la chromatographie suivant l'invention
- la figure 10 est un schéma comparatif de l'efficacité de garnissages multicapillaires poreux et non poreux dans un processus chromatographique
- La figure 11 est une vue d'un chromatogramme illustrant les performances attendues d'un tel procédé.
- La figure 12 est une vue d'un garnissage multicapillaire suivant l'invention obtenu par un procédé sol gel.

**DESCRIPTION DETAILLEE DE L'INVENTION**

L'invention permet d'obtenir une structure capable de concurrencer les garnissages particulaires dans la diversité de leurs applications, et particulièrement en chromatographie.

Le matériau monolithique est un solide (silice amorphe, alumine activée ou, selon l'invention, un aluminosilicate) essetiellement poreux comprenant une multiplicité de conduits rectilignes et contigus, parallèles entre eux, qui sont des conduits de dimensions capillaires (c'est-à-dire d'un diamètre n'excédant pas quelques millimètres) et qui imposent une direction préférentielle au fluide dans le lit. La masse poreuse peut offrir une haute surface d'échange entre le fluide et le solide, qui peut être un adsorbant ou le support d'une phase stationnaire.

La masse poreuse peut être elle même le support d'un autre matériau actif ou utile vis à vis de l'utilisation finale.

Une chromatographie est un procédé de séparation moléculaire particulier caractérisé en ce qu'il effectue une séparation d'un mélange de substances chimique sous l'action contradictoire

- d'un entrainement dynamique de ces espèces par un courant d'une phase éluante
- d'une rétention de ces espèces par une phase stationnaire.

De préférence ce procédé est poursuivi jusqu'a élution complète des espèces séparées hors de la phase stationnaire.

On comprendra que pour une application chromatographique le solide poreux constituant le garnissage sera un matériau utilisable pour une séparation chromatographique, comme une silice poreuse issue d'une solution précurseur d'un gel de silice (c'est-à-dire un gel de silice) une silice amorphe issue de la pyrolyse d'un silicone, ou tout autre matériau de base siliciée utilisable pour une application chromatographique. Ceci exclut en particulier du champ de l'invention les matériaux tels que l'alumine désactivée de type alpha comme celle issue d'une opération de frittage d'un nid d'abeille extrudé et la silice de surface profondément déshydroxylée telle que celle issue d'un traitement à haute température comme le verre de silice.

Avantageusement on choisira des silices dont la surface comporte entre 2 et 8 groupement hydroxyles par nanomètre carré. Cette caractéristique se mesure avant un traitement de surface éventuel comme une silanisation. Ceci peut correspondre en particulier à un traitement thermique à une température inférieure à 700°C. On consultera par exemple sur ce sujet l'ouvrage « Chromatographies en phases liquide et supercritique », R. Rosset, M. Caude, A Jardy, Editions Masson, 1991, pp 224 à 226.

Parmi les alumines utilisables en chromatographie on choisira de préférence les alumines dites activées de la forme χ ou η.

On comprendra d'autre part que des dispositifs suivant l'invention peuvent être obtenu par fixation et dépôt sur un monolithe poreux constitué d'un matériau quelconque, d'une couche active de silice poreuse, d'alumine activée, ou d'une de leur combinaison destinée à promouvoir une séparation chromatographique. Ce dépôt peut se faire en phase liquide par trempage dans une suspension de matériau actif, en phase gaz par dépôt chimique en phase vapeur par exemple. On pourra également transformer un matériau de base d'un monolithe en un matériau poreux utilisable pour une séparation chromatographique selon l'invention.

La nature poreuse du solide permet un échange de matière par diffusion entre les conduits adjacents, permettant ainsi de réduire les gradients de concentration entre les conduits capillaires voisins et de diminuer l'effet de leurs irrégularités.

Ces irrégularités proviennent de faibles différences en termes de topologie et de diamètres entre les différents conduits.

La structure monolithique du garnissage obtenu permet d'autre part d'assurer que la totalité du fluide transite au travers du coeur des conduits sans autre chemin possible et d'assurer une cohérence mécanique au garnissage.

On définira un monolithe comme suit : structure présentant une multiplicité de conduits de dimensions capillaires fonctionnant en parallèle traversant de part en part une masse mécaniquement solidaire de matériau poreux.

Le monolithe pourra avoir toute longueur appropriée au procédé à réaliser, entre quelques millimètres et plusieurs mètres.

Le monolithe pourra avoir une section appropriée au procédé à réaliser, entre quelques micromètres carrés et plusieurs mètres carrés.

Le monolithe aura de préférence une porosité élevée vis à vis des molécules communément rencontrées dans la pratique industrielle. Sa microporosité pourra être variable suivant les besoins. Afin de ne pas perdre de volume poreux vis à vis d'une application pratique, la proportion de ses micropores de diamètre inférieur à 0,3 nm sera, selon l'invention, inférieure à 50 % du volume poreux du monolithe, volume poreux mesuré en excluant le volume des conduits. Encore plus préférentiellement elle sera inférieure à 20% de ce volume, et encore plus préférentiellement inférieure à 10% de ce volume.

Il existe à ce jour deux techniques principales pour l'obtention de monolithes minéraux: l'extrusion et l'enduction des parois de nids d'abeilles métalliques. Ces techniques ne permettent pas de réaliser à faible coût des canaux très fins, véritablement capillaires et de diamètre inférieurs à un ou quelques millimètres.

Suivant l'invention le diamètre des canaux ou conduits rectilignes sera inférieur à 0,25 mm et encore plus préférentiellement inférieur à 50 micromètres.

On connaît deux principaux oxydes minéraux pour la réalisation de séparations chromatographiques : la silice amorphe et l'alumine activée. Le premier est un oxyde de silicium, le second est un oxyde d'aluminium. Ces deux oxydes présentent de nombreux points communs, en particulier :

- ils peuvent être obtenus sous forme de solides de haute surface spécifique, plusieurs centaines de $m^2$ par gramme ;
- ils peuvent être mis en forme par la voie sol-gel ;
- ils présentent une surface très active vis-à-vis de l'adsorption de molécules organiques, ce qui les rend sélectifs pour un procédé de séparation chromatographique.

Les garnissages selon l'invention seront composés d'un aluminosilicate.

On notera qu'il est possible d'obtenir des gels composés de mélanges réactionnels de silice et d'alumine comme des aluminosilicates. En particulier la peptisation des argiles comme la kaolinite et leur coagulation en présence de sels en solution permet d'avoir accès à des procédés rentrant dans le cadre de l'invention, comme étant composés d'une combinaison de silice et d'alumine. D'une façon générale l'utilisation de gels permet d'abaisser les températures mises en oeuvre dans des procédés de stabilisation et de deshydroxylation du minéral et de conserver la structure poreuse du gel et sa variété allotropique.

Selon l'invention, les sections de ces conduits sont régulières et uniformes, c'est-à-dire que les conduits présentent respectivement une section substantiellement constante sur toute leur longueur et des diamètres proches les uns des autres.

Par section régulière ou substantiellement constante, on entend en particulier un diamètre ne variant pas plus d'un facteur 2 entre les zones étroites et larges d'un même conduit.

Par diamètres proches les uns des autres, on entend en particulier que le diamètre moyen d'un conduit ne diffère pas en moyenne de plus de 30% de la moyenne des diamètres des conduits.

En d'autres termes, et si l'on suppose que les diamètres des conduits sont répartis suivant une loi normale centrée réduite, l'écart type ne doit de préférence pas dépasser 30% de la moyenne des diamètres des conduits. De préférence, cet écart type ne dépassera pas 5 % et, de manière préférée, 0,5% de la moyenne des diamètres des conduits.

De préférence les conduits ont une disposition et une forme constante et uniforme.

D'après un mode de réalisation préférentiel des conduits capillaires, les conduits ont de préférence une section substantiellement circulaire.

Cependant, les conduits pourront prendre différentes formes géométriques, selon le mode de fabrication des fibres qui servent à leur réalisation. Ces formes géométriques peuvent être un cercle, un carré, un polygone de côtés substantiellement égaux. Le diamètre du conduit est dans ce cas le diamètre du cercle inscrit dans cette forme géométrique

Suivant un mode préférentiel de réalisation de l'invention, le garnissage multicapillaire contient une forte proportion de solide.

En effet, une proportion volumique élevée de solide de haute surface spécifique augmente la capacité du garnissage et rend le volume de lit nécessaire plus faible.

En particulier cette proportion est telle que sa densité soit supérieure à 0,12 kg/litre et de préférence supérieure à 0,15 kg/litre.

De façon encore plus pertinente, on définira ces garnissages par la proportion de volume occupée par les conduits capillaires dans le monolithe. Ce ratio sera dans le présent texte nommé « volume relatif des capillaire».

De préférence le volume relatif des capillaires sera inférieur à 90%, encore plus préférentiellement inférieur à 80% pour des applications analytiques. Pour des applications en chromatographie préparative, le volume relatif des capillaires pourra être beaucoup plus faible, de préférence, mais de façon non limitative, inférieur à 40 %, encore plus préférentiellement inférieur à 20%, de façon à augmenter au maximum la capacité du garnissage.

De préférence, la paroi séparant les conduits parallèles adjacents présente en son point le plus fin une épaisseur inférieure à la moitié de leur diamètre ou de leur taille transversale caractéristique.

On notera que des parois minces sont favorables au bon déroulement d'un procédé sol gel. En effet les stress développés dans le matériau lors de son séchage sont d'autant plus faible que son l'épaisseur est réduite.

De préférence les parois séparant les conduits sont régulières en dimensions et en disposition.

De préférence pour les processus d'absorption, le gel constituant le monolithe comprendra un volume élevé de mésopores d'un diamètre de 4 nm à 25 nm, de façon à créer de la surface spécifique accessible par diffusion.

Le volume poreux mesuré en en excluant le volume des conduits pourra par exemple être compris entre 0,3 et 3 $cm^3$/g pour la silice et entre 0,2 et 0,5 $cm^3$/g pour l'alumine.

Dans le cas de la silice, lorsque l'on utilisera des gel bimodaux tels que ceux décrits dans le brevet Holloway et dans la publication de N, Ishizuka, le volume poreux pourra être notablement plus important en y incluant les macropores.

Dans le cas de la silice le volume poreux mesuré en en excluant le volume des conduits sera donc de préférence supérieur à 0,3 $cm^3$/g.

De préférence pour les processus d'absorption, le gel constituant le monolithe aura une surface spécifique élevée, comprise par exemple entre 90 $m^2$/g et 600 $m^2$/g pour la silice et l'alumine.

De préférence pour la réalisation de l'invention, le monolithe possédera un nombre élevé de conduits, par exemple plus de cinq, de préférence plus de cinquante, et encore plus préférentiellement plus de cinq cents.

On note que la perte de charge dans un garnissage multicapillaire est un ou deux ordres de grandeur plus petite que dans un lit de particules de même dimension caractéristique. Ceci résulte de l'expression des lois de Darcy et de Poiseuille.

En conséquence, l'impédance de séparation d'un garnissage multicapillaire en séparation chromatographique pourra être augmentée d'un ou deux ordres de grandeurs par rapport à celle d'un garnissage particulaire.

Le garnissage multicapillaire comprend un grand nombre de capillaires de longueurs égales et de rayon moyen R. On considère que le diamètre suit statistiquement une loi normale avec une déviation standard, ou écart type, $\sigma_R$. On peut calculer que pour ce garnissage multicapillaire le nombre maximum de plateaux théoriques de la séparation chromatographique qui peut être obtenue s'écrit :

$$N_{R,max} = R^2 / (9 \cdot \sigma_R^2)$$

Par exemple, si l'écart type relatif est de 1 ‰, le nombre maximum de plateaux de la séparation sera de 1,1 $10^5$. Si ce diamètre à un écart type relatif de 1%, 1100 plateaux seront déjà disponibles, ce qui est suffisant pour de nombreuses séparations chromatographiques.

L'écart type relatif est le rapport de l'écart type sur la moyenne de la distribution.

En fait les résultats peuvent être meilleurs si les conduits ne sont pas parfaitement individualisés mais sont étroitement empilés ou proches les uns des autres avec des parois les séparant suffisamment fines et telles que le transfert de matière prenne place entre chaque conduit et ses plus proches voisins.

Ceci peut être effectué en fabriquant le garnissage multicapillaire dans une masse partiellement ou totalement poreuse permettant à chaque conduit de s'équilibrer avec ses voisins par diffusion. L'effet résultant, dont le calcul dépend de la disposition spatiale des capillaires, sera une atténuation ou un amortissement de la différence de comportement des conduits individuels, du fait des transferts de matière diffusifs d'un conduit à l'autre.

L'effet résultant observé est une augmentation de l'efficacité, les variations aléatoires des diamètres des conduits étant moyennées par le processus de diffusion

Suivant un autre avantage de l'invention, la masse poreuse est le support d'une phase stationnaire pour la chromatographie ou constitue elle-même la phase stationnaire par sa haute surface spécifique.

Suivant un autre avantage de l'invention, la perte de charge beaucoup plus faible au travers d'un garnissage multicapillaire à dimension caractéristique égale permet d'augmenter fortement la puissance de séparation.

La perte de charge d'un lit de particule suit la loi de Darcy. La perte de charge d'un garnissage multicapillaire suit la loi de Poiseuille.

La perte de charge d'une phase liquide (de l'eau à température ambiante) pour un lit de particules de diamètres 5 $\mu$m est de 250 bar/m, et pour des capillaires de diamètre 5 $\mu$m de 18 bar/m à une vitesse d'élution de 1 mm/s rapportée à la section totale de la colonne. La fraction de vide du garnissage multicapillaire est supposée être de 0,7.

La perte de charge d'un garnissage multicapillaire de 100 mm de long est dans ce cas de seulement 1,8 bar.

Cela signifie en fait que des capillaires beaucoup plus fins peuvent être utilisés et que la vitesse d'analyse et l'efficacité peuvent être simultanément considérablement augmentées dans des appareils de chromatographie analytique existants.

Ces différents garnissages montrent une dépendance linéaire de la perte de charge avec la vitesse de l'éluant et la longueur.

L'impédance de séparation E est donnée par la formule :

$$E = t_0 \cdot \Delta P / (N^2 \cdot \eta)$$

Pour un garnissage particulaire, elle est de 2350.

Pour un garnissage multicapillaire, elle est de 115.

Le garnissage multicapillaire est deux ordres de grandeur supérieur en termes d'impédance de séparation. Comme précédemment mentionné, cela signifie que de très petits capillaires peuvent être utilisés avec des pompes haute pression et leurs périphériques, et que vitesse d'analyse et efficacités peuvent être augmentées d'un ordre de grandeur.

Par exemple, un garnissage multicapillaire pour HPLC peut être proposé comme suit : en phase liquide, pour une perte de charge donnée, un nombre de plateaux théoriques requis donnés, le diamètre $d_c$ à efficacité optimale s'écrira pour un capillaire unique :

$$d_c = (128 \cdot \eta \cdot N \cdot D / \Delta P)^{1/2}$$

Pour une perte de charge comprise entre 80 et 180 bars, et une haute efficacité de 100 000 plateaux, on tire de cette équation:

$$d_c = 0,84 - 1,46 \ \mu m$$

D'un point de vue pratique, un garnissage pour la chromatographie analytique en phase liquide peut consister en un faisceau de milliers de capillaires d'un diamètre de 0,1 à 5 $\mu$m, et de préférence d'un diamètre de 0,1 à 1,5 $\mu$m séparés par des parois de 0,05 à 1,0 $\mu$m d'épaisseur de silice ou d'alumine poreuse de haute surface spécifique.

D'autre part, dans le cas de la chromatographie en phase gazeuse, on donne de préférence aux conduits un diamètre supérieur à 50 $\mu$m de façon à conserver une perte de charge acceptable.

L'invention consiste de préférence dans un garnissage pour lequel la masse poreuse présente une surface supérieure à 20 m$^2$ par gramme.

Les diamètres des capillaires sont de préférence répartis suivant une loi normale ayant un écart type inférieur à 0,5 % de la moyenne.

Le temps d'élution minimum à efficacité optimale est de 10 à 30 secondes pour une colonne de 100 mm de long, permettant des analyses très rapides et très efficaces, compatibles avec les temps de réponses des détecteurs existants.

Le garnissage permet une vitesse d'analyse spécifique de 3300 à 10000 plateaux par seconde.

Pour que le débit d'alimentation soit de 0,8 à 2,6 µl/mn, compatible avec le système de pompage développé pour les micro colonnes garnies, 3000 à 10000 capillaires doivent être disposés en parallèle. Des débits plus élevés sont assurés en augmentant simplement le nombre de capillaires en parallèle et la section du garnissage.

Pour une bonne efficacité de ces structures, l'homogénéité et la régularité du garnissage final doivent être aussi bonnes que possibles. La porosité des parois des conduits doit être élevée, au mieux 30 ou 40% de fraction de vide ou plus. Les épaisseurs des parois des conduits doivent être aussi faibles que possible mécaniquement pour augmenter les vitesses des phénomènes de diffusion.

D'autre part la très faible perte de charge d'un garnissage multicapillaire permet la réalisation pratique de dispositifs qui sont restés à ce jour sans utilisation notable.

Un garnissage multicapillaire peut être vu comme l'assemblage d'un grand nombre de colonnes chromatographiques adjacentes.

Le garnissage chromatographique permet la réalisation d'un outil à la fois souple et simple pour réaliser la chromatographie préparative, la chromatographie annulaire continue, en plus des techniques classiques de type lit mobile simulé.

Un appareil type pour la chromatographie annulaire continue comprend:

- un cylindre annulaire de garnissage multicapillaire dont les conduits sont parallèles à son axe principal. Les deux extrémités de ce garnissage sont planes et perpendiculaires à son axe, et servent de support aux utilitaires d'entrée sortie des fluides.
- Des utilitaires d'entrée et sortie des fluides consistant en des secteurs angulaires séparés, alimentés en mélange à séparer ou en solvant d'élution sur leur face d'entrée, ou collectant les différentes fractions éluées sur leur face de sortie. Les parois délimitant les sections d'alimentation et de collecte sont soit en contact avec le garnissage au moyen d'un joint glissant sur sa surface, soit positionnées très proches du garnissage cylindrique (à quelques dizaines de micromètres de distance par exemple), mais pas à son contact.

Les utilitaires d'entrée et sortie sont fixes les uns par rapport aux autres pour une séparation donnée à un moment donné.

Le cylindre de garnissage et le groupe formé par les utilitaires d'entrées sorties se déplacent les uns par rapport aux autres dans un mouvement de révolution autour de l'axe du cylindre de garnissage.

Ce mouvement peut être imposé au garnissage par un axe auquel il est fixé. Dans ce cas, le garnissage tourne dans une virole externe usinée de façon à laisser un faible jeu entre le garnissage ou une protection le contenant et la virole en question.

Alternativement, c'est le garnissage qui est immobile et les utilitaires d'entrée et sortie sont mis en rotation.

L'introduction du mélange à séparer et du fluide éluant est réalisée au travers de différents secteurs des utilitaires sur la face amont du garnissage.

La récupération des fractions séparées est de façon similaire effectuée sur des secteurs de la surface aval du garnissage.

La constance du temps de séjour de chaque composant dans le garnissage permet de les collecter à des distances angulaires définies et constantes du secteur d'entrée.

L'alimentation continue du secteur d'entrée produit dans ces conditions une collecte continue des composants séparés dans les secteurs de sorties.

L'utilisation de garnissages multicapillaires dans des chromatographes annulaires continus permet de minimiser la diffusion latérale des bandes d'élution à sa composante diffusive pure.

Il s'agit d'une différence importante avec les dispositifs réalisés avec des garnissages particulaires.

Ceci conduit à une augmentation de la puissance de séparation mesurée en NUT ou NETP par rapports aux garnissages particulaires de l'état de l'art.

Sans sortir du cadre de l'invention, les conduits capillaires pourront avoir la forme de fentes ou bandes.

De façon très similaire, on pourra utiliser les garnissages selon l'invention en chromatographie radiale continue.

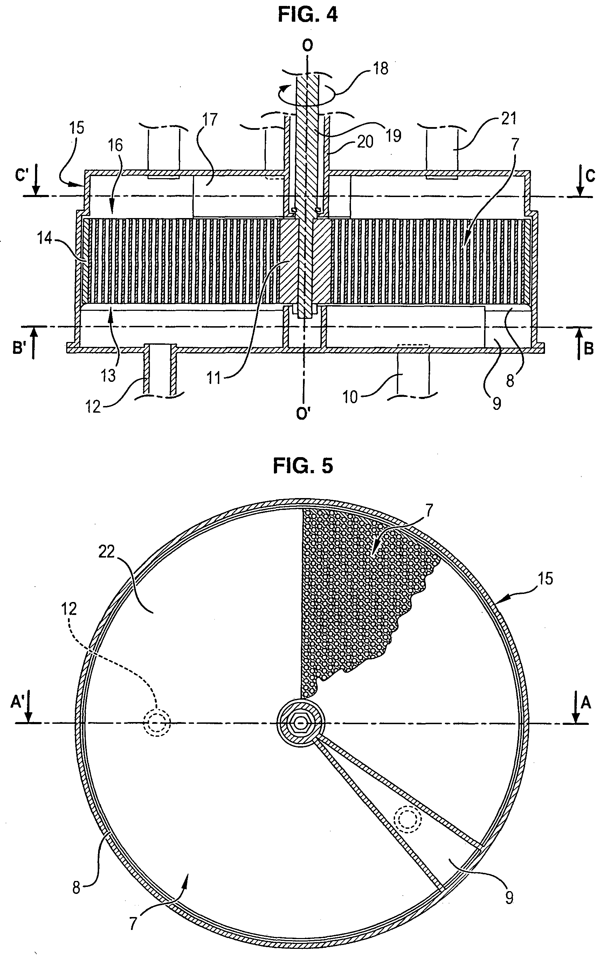

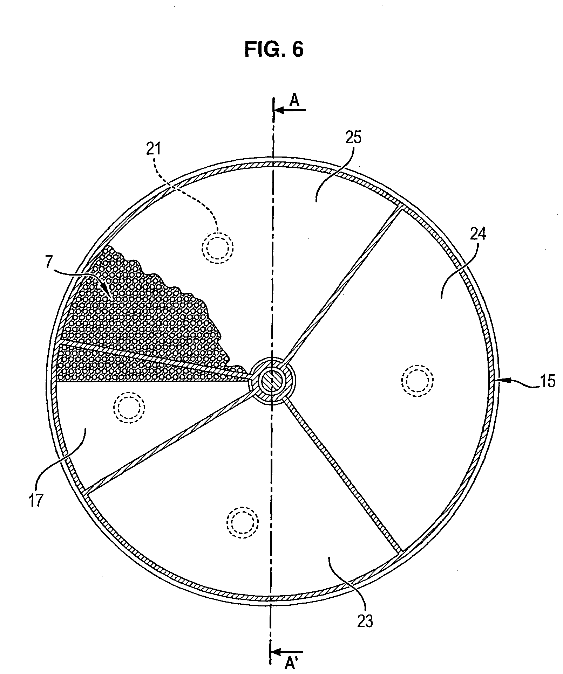

Dans ce cas, le garnissage multicapillaire est conformé en un cylindre dans lequel les conduits capillaires s'étendent radialement et non axialement. Le fonctionnement en est très proche dans son principe à celui qui vient d'être décrit (voir aussi figures 4, 5 et 6), le fluide éluant et les composés à séparer s'écoulant dans ce cas de l'intérieur du cylindre vers l'extérieur du cylindre, ou vice versa. Les secteurs d'alimentation et de collecte sont dans ce cas des bandes axiales, se déplaçant d'un mouvement continu relativement au garnissage cylindrique annulaire.

La chromatographie annulaire continue permet particulièrement de séparer un grand nombre de composants présentant des temps de rétention très proches, comme des isomères , isomères optiques, isomères de position, etc... en une seule passe dans un appareil unique, ou en plusieurs passes dans des appareils en cascade avec ou non des reconcentrations intermédiaires des éluats.

Les garnissages multicapillaires selon l'invention peuvent être fabriqués par toute méthode connue dans l'art antérieur et par de nouvelles méthodes décrites ci-dessous. Les méthodes suivantes sont particulièrement adaptées.

Une première méthode consiste à recouvrir et enrober un faisceau de fibres avec un matériau matriciel solide, et à détruire ou éliminer le matériau des fibres de façon à ne laisser subsister que la matrice d'enrobage traversée par les conduits capillaires.

Les fibres sont ainsi les précurseurs des conduits capillaires.

Les fibres peuvent être éliminées par action mécanique, par fusion, vaporisation, dissolution, attaque chimique, etc...

La fibre servant de moule au capillaire final, des tolérances de fabrication très étroites de celle-ci permettent d'obtenir des capillaires très réguliers jusqu'à des dimensions microniques grâce aux techniques de production de monofilaments bien connues, et donc d'excellentes performances de séparation peuvent être atteintes. Des fibres submicroniques existent. Des fibres nanométriques sont en cours de développement. Il s'agit schématiquement de réaliser un matériau composite dont on ne laisse subsister que la matrice.

Un procédé selon l'invention comprend ainsi les étapes consistant à joindre des fibres précurseurs des conduits capillaires avec un liant, créant ainsi une matrice autour des précurseurs, et à éliminer le coeur des fibres précurseurs supportant la matrice par tout moyen, dissolution, oxydation, attaque chimique, fusion et drainage du liquide, gazéification, de façon à laisser la matrice utilisable comme base d'un garnissage pour la chromatographie

Une solution simple consiste à assembler un faisceau de fibres hydrophiles du diamètre requis, à les submerger dans une solution ou suspension aqueuse d'une solution précurseur d'un gel de silice ou d'alumine ou d'une de leur combinaison, dont la polymérisation et/ou le gel sont assurés in situ.

Dans le présent texte, on entend, par « solution précurseur d'un gel de silice », un liquide de composition telle que, par son évolution dans les conditions du procédé de fabrication, il conduise à un gel de silice. Il peut en particulier s'agir :

- d'une solution aqueuse acidifiée d'un silicate alcalin
- d'une solution aqueuse d'un silicate alcalin dont les ions métalliques ont étés absorbés et échangés par des ions H+ par une résine échangeuse d'ion sous sa forme acide
- d'un sol de silice préparé par précipitation-croissance de silice monomère ou faiblement polymérisée en phase aqueuse légèrement basique sur des nucléïs de façon à former des nanoparticules sphériques
- d'une solution aqueuse à pH déterminé d'une molécule organométallique dérivée du silicium comme un alcoxysilane, comme le tetraéthoxyysilane, ou le tetraméthoxyysilane.

De même, on entend, par « solution précurseur d'un gel d'alumine », un liquide de composition telle que, par son évolution dans les conditions du procédé de fabrication, il conduise à un gel d'alumine.

On trouvera des exemples de telles solutions et de tels procédés dans les publications suivantes : « Silica-based packing materials for PREP HPLC, SFC and SMB », D. Sanchez, Analusis magazine, 1998, 26, N°7 ; « Alumina gels that form porous transparent Al2O3 », B. E. Yoldas , Journal of Materials Science, 10, (1975), pp 1856-1860 .

Le faible angle de contact entre le matériau du fil et la solution favorise la création d'un film de solution homogène entre les fibres.

Pour former les conduits capillaires, les fibres sont hydrolysées en milieu acide par exemple, ou carbonisées et brulées.

Des garnissages de silice poreuse et de silice poreuse greffée peuvent être obtenus de cette façon.

Des garnissages d'alumine activée peuvent être obtenus suivant le même schéma.

Pour une meilleure qualité et homogénéité du garnissage obtenu, il peut être utile de commencer par recouvrir les fibres par une couche d'enveloppe d'un matériau d'enrobage dit espaceur avant de les assembler en faisceau.

En effet, des fibres nues sont susceptibles de se toucher les unes les autres, en des points ou lignes de contact, et ceci génèrera des points de fragilité et des inhomogénéités dans le garnissage.

Le procédé consiste dans ce cas à recouvrir un fil métallique ou non métallique par une épaisseur d'un matériau d'enrobage adéquat dit espaceur, à joindre ces fibres en faisceau, éventuellement avec un liant, et à éliminer sélectivement le matériau des fibres par fusion, dissolution, vaporisation, attaque chimique, etc.

En particulier l'espaceur peut être poreux et sera partiellement ou totalement intégré au monolithe final.

L'enveloppe ou couche de matériau d'enrobage espaceur peut être déposée par coextrusion d'un fil de coeur avec un polymère ou un gel.

Elle peut être déposée par trempage dans une solution d'un polymère, ou d'oligomères ultérieurement traité par polymérisation thermique ou UV et réticulation.

L'enveloppe peut être constituée d'un dépôt chimique (métal, oxyde,) déposé en phase vapeur, par projection plasma, par évaporation sous vide, par dépôt en phase liquide. Elle peut être déposée ou projetée à l'aide de champs électriques ou électrostatiques dans le cas des matériaux non conducteurs, la fibre étant électrisée à un certain potentiel, et une poudre espaceur étant électrisée à un potentiel de signe opposé et mise à proximité du fil de façon à se déposer sur lui. Elle peut être déposée par une technique d'impression de type jet d'encre. Elle peut être constituée d'une poudre agglomérée ou d'un gel déposé par passage dans un bain ou suspension liquide.

L'espaceur peut être constitué par une poudre déposée en un film mince à partir d'une suspension, ou par tout matériau susceptible d'être déposé en un film.

En particulier, il pourra être réalisé par trempage de la fibre dans une suspension contenant au moins deux constituants, d'une part un minéral solide pulvérulent mésoporeux ou microporeux, gel de silice , alumine activée, zéolithe, ou tout autre matériau et d'autre part un liant minéral, sol de silice ou d'alumine ou argile peptisée notamment.

Le premier constituant porte la fonction séparatrice chromatographique ou à une autre utilité et peut être obtenu par toute méthode connue, le second constituant à pour fonction de lier entre elles mécaniquement les particules solides et de permettre la manipulation du film enrobé et son assemblage en faisceau.

L'action liante peut être assurée par le gel du sol, par son séchage, ou par son gel suivi de son séchage.

De préférence, et afin de ne pas colmater les mésopores et les micropores éventuelles du solide minéral pulvérulent on utilisera pour le liant minéral un sol dont la taille des particules élémentaire est supérieure à celle des mésopores ou des micropores.

On pourra en particulier réaliser un murissement du sol dans des conditions provoquant son agrégation partielle avant son mélange avec le solide minéral mésoporeux ou microporeux.

Dans le cas de la silice, ce mûrissement peut être réalisé de façon bien connue dans l'état de l'art par une conjonction de pH, température et force ionique du milieu du sol.

Enfin on pourra utiliser des sols liants relativement dilués.

Un ou plusieurs additifs organiques de texture, ou liants, peuvent être ajoutés à la suspension de trempage, de façon à impartir au fil final une tenue mécanique suffisante pour le manipuler et le mettre en forme.

Ces additifs peuvent faire partie du monolithe final ou être éliminés dans une phase ultérieure du procédé.

On notera que dans ce qui précède l'action liante est comprise comme devant lier la couche d'espaceur à la fibre dans un premier temps.

La tenue mécanique de l'espaceur peut être assurée par un frittage lorsque la fibre supporte les hautes températures (cas d'un fil de fer ou d'acier par exemple) et de préférence lorsque l'espaceur n'est pas constitué d'une silice amorphe de haute surface spécifique ou d'alumines activée, ces deux substances perdant leurs surfaces spécifiques et leur activité aux hautes températures réclamées par le frittage. Ce mode opératoire pourra être appliqué par exemple à un espaceur constitué de billes de verre.

La tenue mécanique de l'espaceur peut être assurée par une cuisson permettant à des forces de type liaison hydrogène de s'établir entre les particules solides.

La silice est utilisée sous sa forme amorphe.

Dans le cas de l'alumine, qui existe sous de nombreuses formes cristallographiques plus ou moins actives et plus ou moins cristallisées, on utilise de préférence des gels d'alumines préparés au départ de trihydrate (hydrargillite ou bayerite) activés par calcination maîtrisée en une alumine de transition, en particulier les alumines activées $\chi$ ou $\eta$ utiles en chromatographie. Les alumines $\kappa$ et $\theta$ peuvent être obtenue par un traitement thermique à plus haute température en perdant de leur activité.

Alternativement le gel d'alumine sera préparé au départ de monohydrate (boehmite) activé par calcination en une alumine $\gamma$ utile pour son activité de support catalytique.

De préférence dans ce cas le garnissage est réalisé en une seule variété allotropique d'alumine, afin que tous les sites se comportent de la même façon vis-à-vis des constituants du mélange à séparer.

En particulier, lorsque le garnissage est composé d'une poudre déposée en suspension agglomérée par un gel, il est souhaitable de faire en sorte que poudre et gels soit activés en espèces identiques après une calcination.

Alternativement, dans ce même cas de figure, on pourra choisir et synthétiser le gel de renfort de façon à ce que sa surface spécifique après activation soit faible et négligeable devant celle de l'alumine pulvérulente.

Le gel de liaison des particules entre elles pourra être constitué d'un mélange réactif de silice et d'alumine comme un aluminosilicate. En particulier les argiles comme la kaolinite , qui sont des aluminosilicates, peuvent se présenter suivant un état très fluide et liquide ou un état précipité très visqueux pouvant servir d'agent de liaison suivant la force ionique du milieu et les cations métalliques qu'il contient. L'état très liquide sert à la mise en forme initiale du dépôt d'un pulvérulent sur la fibre, et son contact avec des sels ou une solution saline assure son gel, ou épaississement. Il peut également servir de liant par séchage.

L'espaceur pourra être constitué d'une poudre adhérente à la fibre. Cette variante se réalisera particulièrement simplement en enduisant la fibre d'une très faible épaisseur d'un polymère visqueux et collant réticulable sous UV comme de l'acide polyacrylique dilué par de l'acide acrylique ou méthacrylique, par exemple à partir d'une solution aqueuse évaporée sur la fibre, l'eau étant le solvant léger vaporisable, et contenant un photoinitiateur de polymérisation radicalaire. La fibre ainsi enduite est mise en contact de la poudre par immersion dans un lit fluide de pulvérulent ou par projection de celui ci, ce qui provoque l'agglutination d'une monocouche de grains solide sur la surface de la fibre. La fibre chargée est exposée aux UV de façon à assurer une liaison ferme entre les grains de poudre devenus adhérents à la fibre et le coeur du fil par la photopolymèrisation de la colle.

Cette variante pourra tout aussi simplement être réalisée en enduisant la fibre d'une solution visqueuse d'un polymère dans un solvant, l'agglutination d'une épaisseur de grains solide sur la surface de la fibre ainsi traitée, et séchage du solvant.

La poudre pourra être constituée d'un gel de silice ou d'alumine ayant les propriétés chromatographiques souhaitées pour le produit final, et synthétisée par ailleurs par des techniques parfaitement connues et éprouvées avec la granulométrie souhaitée.

Sans sortir du cadre de l'invention, le solide pulvérulent déposé sur la fibre et supporté par le monolithe, c'est à dire occlus dans ou déposé sur le monolithe, peut être un tiers corps solide ayant un rôle fonctionnel varié vis à vis de l'utilisation du garnissage. Ce peut être en particulier un catalyseur, un tamis moléculaire ou un échangeur d'ion, un Kieselguhr ou terre à Diatomées. En particulier ce peut être une zéolithe.

Les zéolithes peuvent généralement être représentées par la formule générique :

$$M_{2/n}OAl_2O_3ySiO2wH2O$$

M étant un cation métallique permettant d"équilibrer les charges tel que le sodium, le potassium, le magnésium, le calcium, etc... n représentant la valence du cation et y étant égal à 2 ou supérieur.

Suivant une autre méthode pour éviter le contact des fibres précurseurs des conduits, on assemble celles-ci en nappe par un tissage.

Si le fil précurseur est en chaîne, le fil de trame sert d'espaceur, et inversement.

La fibre perpendiculaire au précurseur pourra être une fibre de verre, dont la compatibilité thermique en terme de coefficient de dilatation avec le matériau minéral poreux base du monolithe est bonne.

L'inertie chimique d'une fibre de verre est excellente et comparable à celle de la silice.

Sa surface spécifique étant faible, elle ne perturbe pas l'analyse.

Les fibres sont assemblées en faisceau, et peuvent être collées les unes aux autres.

Suivant un perfectionnement de l'invention les fils précurseurs des canaux comprennent une sous couche (sous couche vis-à-vis du monolithe, couche externe vis-à-vis de l'âme du fil), d'un autre composé solide auxiliaire du procédé et destinée à être évacuée durant celui ci. Ce composé peut être un polymère ou une substance solide soluble dans l'eau ou dans un autre solvant, un polymère hydrolysable, un polymère gonflant à l'eau, ou une cire ou un métal fondant à une température supérieure ou légèrement supérieure à celle du procédé de fabrication du composite, ou tout autre matériau adéquat.

Cette sous couche enveloppe le coeur de la fibre.

Cette sous couche est dite couche ablative dans ce document.

Cette couche ablative est réalisée par dépôt sur le coeur de la fibre avant réalisation de la préforme du monolithe.

Cette dite couche ablative peut être intermédiaire entre le coeur de la fibre et l'espaceur

Une couche ablative de cire ou de métal fond en produit liquide de faible viscosité.

Ce prétraitement à deux avantages :

- le différentiel de dilatation entre la fibre et la matrice peut être rattrapé par, par exemple, l'évacuation d'une cire fondue liquide. On peut de ce fait par exemple carboniser à haute température des fibres polymères sans détruire un garnissage minéral les contenants. On peut aussi dissoudre dans un solvant une fibre organique en compensant les inévitables et potentiellement destructeurs phénomènes de gonflement de la fibre par le solvant par l'espace laissé libre par l'évacuation de la couche d'ablation.
- La disparition, la dégradation ou l'évacuation de la couche ablative permettent d'avoir accès au coeur d'un garnissage, éventuellement massif, réalisé au départ de fibres peu coûteuses, polyoléfines, acétate de cellulose, etc... On peut ainsi y faire accéder un liquide réactif (solution acide d'hydrolyse, nanosol de renforcement etc...), ou un gaz de séchage

Parmi les cires existantes on pourra utiliser, sans prétendre être exhaustif: les paraffines, les acides gras supérieurs à C12, les esters d'acides gras comme les esters de glycérine, la cire de carnauba, les cires aliphatiques ou aromatiques issues de l'industrie des hydrocarbures.

La couche ablative pourra représenter par exemple entre 1% et 40% de la section de la fibre recouverte de cette sous couche. Le coeur de la fibre peut avantageusement assurer dans ce cas la tenue mécanique du filament.

Avantageusement suivant l'invention les préformes de canaux, ou fibres éventuellement traitées comme mentionné ci dessus, sont sujette à l'action d'un liant afin de les solidariser dans un monolithe.

On notera cependant que l'on pourra réaliser une étape d'élimination des fibres au départ d'un empilement purement mécanique de celles-ci avant l'action d'un liant. Des fluides réactifs ou dissolvant ou produits d'une réaction peuvent en effet aisément circuler dans la profondeur du garnissage par les interstices ou lumens laissés libres entre les fibres.

Ce liant pourra être basé sur tout composés minéral amenant une cohésion du monolithe comme en particulier un oxyde d'aluminium, un oxyde de silicium, un oxyde de zirconium, un oxyde de titane, un oxyde de terre rare comme l'yttrium le cérium ou le lanthane, un oxyde de bore, un oxyde de fer, un oxyde de magnésium de calcium de strontium ou de baryum, un oxyde de germanium, un oxyde de phosphore, un oxyde de lithium, de potassium ou de sodium, un oxyde de Niobium ou de cuivre. Ces composés peuvent être utilisés purs ou en combinaison ou en mélange.

Suivant une voie de réalisation privilégiée de l'invention, l'action liante est mise en oeuvre par un procédé sol gel.

Ce liant peut être en particulier un gel de silice ou d'alumine, préparée in situ par un procédé sol gel. On immerge un faisceau de préformes dans un sol précurseur d'un gel de silice ou d'alumine conditionné ou traité de façon telle qu'il évolue en un gel.

Sans sortir du cadre de l'invention ce procédé sol gel pourra également être basé sur un aluminosilicate comme une argile par exemple.

Sans sortir du cadre de l'invention ce procédé sol gel pourra également être basé comme listé précédemment sur un oxyde de zirconium, un oxyde de titane, un oxyde de terre rare comme l'yttrium le cérium ou le lanthane, un oxyde de bore, un oxyde de fer, un oxyde de magnésium de calcium de strontium ou de baryum, un oxyde de germanium, un oxyde de phosphore, un oxyde de lithium, de potassium ou de sodium, un oxyde de Niobium ou de cuivre. Ces composés pourront être la base du gel ou être combinés entre eux de façon à créer un gel multicomposants.

Avantageusement comme base du gel on pourra utiliser des gels d'oxyde de zirconium ou d'oxyde de titane .

Parmi les gels constitués de silicate on pourra utiliser des silicates binaires basés sur la silice et de l'oxyde de bore, de l'oxyde d'aluminium, de l'oxyde de Germanium, de l'oxyde de titane, de l'oxyde de zirconium, de l'oxyde de strontium ou de l'oxyde de fer.

Parmi les gels constitués de silicate on pourra utiliser des silicates ternaires.

Parmi les gels constitués de silicate on pourra utiliser des silicates multicomposants comportant plus de trois constituants.

Parmi les gels basés sur des matériaux non silicieux, on pourra utiliser des binaires d'oxydes de zirconium et d'yttrium, de zirconium et de cérium, de zirconium et de calcium, de baryum et de titane, de lithium et de niobium, de phosphore et de sodium, de bore et de lithium.

Avantageusement le procédé sol gel conduisant à ces gels multicomposants sera basé sur l'hydrolyse de composés organométalliques comme des alcoolates des métaux considérés, seuls ou en mélange avec d'autres organométalliques et éventuellement avec des sels métalliques tels que les nitrates ou les chlorures.

Cette liste n'est pas limitative et il va de soit que tout autre composant ou mélange de composants susceptible d'être mis en forme par la voie sol gel rentre dans le cadre de l'invention.

La méthode décrite précédemment consistant à déposer un espaceur à l'aide d'une suspension de silice ou d'alumine ou d'une de leur combinaison ultérieurement gelée in situ peut également s'appliquer à la réalisation du liant des fibres proprement dites entre elles. On assemble dans ce cas en faisceau les fibres éventuellement recouvertes d'un espaceur et on remplit les espaces libres résiduels dans ce faisceau par une suspension contenant au moins deux constituants, d'une part un minéral solide pulvérulent mésoporeux ou microporeux, gel de silice ou alumine activée ou autre, d'autre part un liant minéral, sol de silice ou d'alumine ou aluminosilicate par exemple. Dans ce cas cependant, on aura intérêt à utiliser des suspensions relativement visqueuses très concentrées en solide pour limiter les phénomènes de retraits au séchage. Avantageusement, dans ce dernier cas, l'espaceur pourra être non poreux.

Suivant un mode de réalisation particulièrement avantageux, on pourra former le monolithe liant ou enrobant les canaux capillaires par une méthode amenant la formation de deux familles de pores, une famille de mésopores et une famille de macropores interconnectées, telle que décrites dans les publications de N, Ishizuka et Holloway R citée au début de ce mémoire. Ce perfectionnement apporte d'importants avantages :

Le gel de silice humide créé par ces méthodes autour des fils précurseur des canaux est très perméable aux fluides et permet à l'état humide la circulation au travers de la masse du garnissage d'un liquide ou d'un gaz au travers de préférence de ses faces d'entrée et sortie.

- Ce fluide circulant peut entre autre avoir pour rôle de modifier la structure poreuse du gel bimodal et donc du garnissage final.
- Il peut avoir pour rôle d'amener au contact de la fibre un réactif provoquant son élimination.
- Cette élimination peut se faire par les méthodes précédemment décrites, en particulier hydrolyse, dissolution ou gazéification.

- Il peut permettre d'échanger les eaux mères du gel par un fluide organique dont le séchage est moins destructif pour la structure du gel.
- Il peut permettre de sécher le garnissage par circulation d'un gaz ou d'un fluide supercritique avant élimination des fibres précurseur des canaux.
- La porosité élevée des parois du monolithe obtenu est favorable à l'accomplissement rapide des processus de diffusion entre les canaux.

Les macropores pourront de préférence représenter une fraction suffisante du volume poreux de la masse du monolithe occupée par le gel bimodal, suffisante pour assurer la percolation et l'interconnection de celles ci de façon à permettre l'écoulement d'un fluide. De préférence cette fraction sera supérieure à 40 % et encore plus préférentiellement supérieure à 70% dans le gel bimodal.

On notera que l'utilisation d'un gel bimodal peut se faire en combinaison avec l'utilisation d'un gel de silice ordinaire. En particulier un gel de silice ordinaire pour la chromatographie pulvérulent est déposé sur une fibre précurseur de façon à la recouvrir de façon étroite, complète et dense et servir d'espaceur, et ces fibres sont organisées en un faisceau. L'espace libre entre les fibres et dans les pores du gel est immergé dans une solution précurseur d'un gel bimodal. Le gel bimodal résultant sert de liant au monolithe final, emprisonne et lie la couverture pulvérulente des fibres et permet une élimination aisée du coeur des fibres libérant les canaux.

Le rôle chromatographique vis-à-vis d'une séparation peut dans dans un tel garnissage être principalement dévolu au gel ordinaire contenu dans le garnissage final.

On notera que dans tous les cas quand la masse du garnissage est constituée de particules nanoscopiques de silice amorphe agglomérées (gel de silice) ou de toute autre masse monolithique solide, et particulièrement d'une masse solide minérale, elle peut être renforcée avant séchage soit par un mûrissement à un pH adéquat, basique pour la silice, soit en déposant ou précipitant de la silice amorphe sur celle-ci en phase aqueuse de façon à la renforcer mécaniquement en rigidifiant sa structure.

Il est difficile de réaliser une précipitation de silice dans un objet dense, car la solubilité de la silice dans l'eau est très faible (100 ppm à température ambiante, 400 ppm à 100°C). Les sursaturations permissibles, (de l'ordre de 500 ppm à température ambiante), ne peuvent renforcer que les couches externes d'un objet massif, car le faible flux diffusif est instantanément précipité au contact de la haute surface spécifique du garnissage. Par massif, on entend ici la masse poreuse du monolithe.

Une réponse à ce problème peut être formulée comme suit :

Ce dépôt ou précipitation peut être réalisé en mettant le gel en contact intime avec des nucléïs ou germes de silice amorphe de très petit diamètre, de 2 à 4 nm par exemple, ou nanosol, en solution concentrée, dans des conditions de faible force ionique (teneur molaire de sel inférieur à 0,1 à 0,15 N) .Les nucléïs se redissolvent et la silice se reprécipite autour des particules du gel qui ont un diamètre plus élevé. C'est le phénomène du glissement d'Ostwald (Ostwald rippening en anglais).

En effet ces nucléïs, du fait de leur diamètre très faible et de l'effet des forces de tension de surface, sont en équilibre avec une concentration de silice en phase aqueuse plus élevée que celle en équilibre avec les particules constituant des garnissages de silice de surface spécifique supérieure par exemple à 350 m$^2$/g.

La solubilité S des particules de diamètre d (Ralph K. Iler, The chemistry of Silica,1979, p 50) s'écrit :

$$S/So = exp(4EV/R/T/d)$$

La tension de surface E pour de la silice est de l'ordre de 46 erg/cm$^2$ (Iler p54).

Ces nucléïs peuvent être crées par acidification jusqu'à pH 9 d'une solution diluée de silicate de sodium, soit par un acide, soit par un échangeur d'ion. Ces nanosols sont suffisamment stables pour exister durant plusieurs dizaines de minutes en solution, à des concentrations notables, par exemple 5 à 20 g/l en équivalent silice.

Leur contact et leur circulation à 90-100°C à l'intime proximité des parois des capillaires permet aux particules du nanosol de diffuser par mouvement brownien à l'intérieur du gel constituant du monolithe jusqu'à des profondeurs importantes, de plusieurs centaines de microns, et de s'y redissoudre et de déposer de la silice de renforcement en profondeur sur la surface de ce gel constituant du monolithe.

La profondeur de pénétration, c'est-à-dire de renforcement du gel, dépend de la diffusivité du nanosol (entre 0,5 et 1,0 10-9 m2/s, équation d'Einstein)) et de la vitesse des phénomènes cinétiques de redissolution-reprécipitation de la silice amorphe entre le nanosol et le gel.

Il est nécessaire de travailler avec des nanosols et des garnissages imprégnés de solution aqueuse de faible force ionique, et à pH faiblement basique (9 à 10), de façon à éviter la coalescence des particules de silice entre elles.

Le moteur du procédé est la beaucoup plus grande différence de concentration en silice en phase aqueuse moteur de la diffusion permise par le nanosol. Il s'agit de la différence de concentration entre le sein du sol et le sein du gel constituant du monolithe.

Ce procédé utilisant des nanosols pour recouvrir un substrat d'une pellicule de silice amorphe peut être en particulier utilisé pour réaliser des garnissages monolithiques en silice basés sur un squelette d'une autre céramique. Dans ce cas celle-ci est préformée en garnissage multicapillaire avant de recevoir ce dépôt de surface.

Un garnissage en silice peut être hydrophobisé ou modifié en surface par un silane comme l'hexamethyl disilazane, des silanes permettant un couplage avec des chaînes carbonées linéaire en C1, C2, C4, C8 ou C18 ou tout autre silane connu, comme par exemple et de façon non limitative des silanes fonctionalisés cyano, diols, amino, etc... ou tout autre procédé de traitement d'une surface de silice connu dans l'état de l'art.

Un garnissage en alumine peut être coprécipité ou imprégné d'additifs, son état acido - basique peut être ajusté.

Sans sortir du cadre de l'invention le fil précurseur des conduits pourra être constitué d'un tube capillaire, d'un fil affectant des sections géométriques diverses (carrée, hexagonale, etc.).

Sans sortir du cadre de l'invention le fil précurseur des canaux pourra être lui-même poreux.

L'élimination du coeur des fibres doit être accomplie de façon à ne pas détruire leur matrice et/ou leur couche d'enveloppe. Le choix peut être fait entre plusieurs techniques, dont en particulier :

- En chauffant l'ensemble jusqu'à la température de fusion du matériau de coeur des fibres, et élimination du liquide sous un gradient de pression. Des métaux aisément fusibles comme l'étain, le plomb, le bismuth, l'antimoine, leurs alliages (alliages dits de Newton, de Darcet, etc.), ou des résines thermoplastiques comme le polyéthylène, le polypropylène, le PVC, etc. permettent de réaliser l'opération à basse température, de 70 à 200 °C par exemple. Dans ce cas, l'enveloppe ou matrice et le matériau des fibres doivent être le plus possible compatibles en termes de dilatations thermiques, entre la température de fabrication et la température de fusion. Cette méthode permet de recycler le matériau du coeur.

- En constituant les fibres d'un polymère hydrolysable, assemblant les fibres en faisceau, et en immergeant le faisceau dans une solution précurseur d'un oxyde minéral, solution dont on provoque le gel autour des fibres, et en éliminant les fibres par hydrolyse en espèces solubles de faible poids moléculaire. Cette méthode de fabrication est également caractérisée en ce que le gel peut être renforcé par dépôt par croissance amorphe ou cristalline de l'oxyde minéral à la surface des particules le constituant pour augmenter sa résistance mécanique avant son séchage.

- Si l'espaceur et la matrice sont poreuses et permettent l'imprégnation ou la circulation d'un réactif au travers du faisceau assemblé, et son contact avec le matériau de coeur, son élimination peut être réalisée par dissolution, réaction chimique, en phase liquide ou vapeur, etc...Cette opération peut être conduite à température modérée, évitant ainsi les problèmes de dilatation thermiques. On peut utiliser par exemple la formation de chlorures métalliques solubles ou gazeux, par action directe du chlore sur des fils de fer, ou la dégradation thermique de polymères en leurs monomères comme dans le cas des résines acryliques (PMMA), etc... Une dissolution peut être réalisée par un solvant liquide aqueux ou organique ou leur mélange, ou un fluide supercritique.

- Suivant une variante de cette méthode, les fils sont assemblés parallèlement les uns aux autres dans un plan ou feuille, et agglomérés avec un liant poreux ou fibreux, ou tissées, de façon à se conformer en une feuille mince. On obtient une feuille flexible en arrangeant les fibres du liant perpendiculairement aux précurseurs des conduits. L'attaque chimique du coeur des fibres, précurseurs des conduits, peut être réalisée au travers des faces supérieures et inférieures de la feuille. Cette feuille peut ensuite être traitée chimiquement, etc. en fonction de son usage, et empilée ou enroulée suivant toute disposition.

- On peut effectuer l'attaque de la fibre précurseur à partir des faces extrêmes du garnissage, en faisant progresser la réaction par l'intérieur des conduits. On pourra utiliser de très nombreux procédés, particulièrement lorsque le réactif est un gaz et le produit de la réaction un solide poreux n'adhérant pas à son substrat. Par exemple dans le cas de fils de fer :

$$\text{T= 250°C} \quad Fe + 3/2Cl_2 \rightarrow FeCl_3 \text{ (F=282 °C, Eb = 315 °C)}$$

La différence entre la pression de chlore gazeux en équilibre avec le métal et et celle des conditions opératoires appliquée à l'entrée des fibres permet au chlore de parvenir en permanence à l'interface des fibres et d'être consommé. L'élimination du FeCl3 peut être effectuée par évaporation cyclique, ou par gravité sous vibrations. L'élimination du coeur des fibres peut prendre place en plusieurs étapes d'attaque et d'élimination du produit formé.

Parmi les polymères hydrolysables on pourra citer entre autres les polyesthers dérivés de l'acide glycolique, de l'acide lactique, de la cellulose, et en particulier l'acide polyglycolique ou ses copolymères avec l'acide lactique, avec l'ε-caprolactone ou avec le carbonate de trimethyléne (trimethylene carbonate en anglais). On choisira de préférence un polymère dont l'hydrolyse est rapide à une température de 80 à 100°C.

D'une façon générale pour la réalisation de garnissages en silice amorphe ou en alumine activée , on tirera pleinement profit des procédés décrits ci-dessus lorsque l'oxyde résultant sera pur. En effet les applications en génie chimique et particulièrement en chromatographie sont très sensible à l'homogénéité de la surface adsorbante et présentent très aisément des défauts fonctionnels si cette surface présente des impuretés comme des ions métalliques autre que ceux constitutifs de l'oxyde. Un avantage important d'un procédé comme celui décrit ci dessus, et particulièrement d'un procédé sol gel, est qu'il permet une mise en oeuvre des oxydes très purs à basse température, donc en respectant leur porosité, et leur variété allotropique. Les procédés classiques par frittage sur ces oxydes purs dépourvus de tout fondant font intervenir des températures très élevées, supérieures par exemple à 1000 °C ou 1500°C qui altèrent profondément et de façon indésirable la nature du substrat et provoquent un effondrement de la porosité.

Avantageusement les garnissages de silice amorphe ou d'alumine activée pour une application chromatographique présenteront une pureté supérieure à 95% et encore plus préférentiellement supérieure à 99%.

Cependant pour certaines applications le monolithe peut avoir un rôle de support d'un solide fonctionnel, supporté par l'action mécanique ou liante du monolithe. Ce solide peut être occlus dans la structure poreuse du garnissage par addition de celui ci lors d'une des quelconques opérations de synthèse. Ce peut être par exemple un catalyseur, un tamis moléculaire ou un échangeur d'ion. En particulier ce peut être une zéolithe.

Avantageusement dans ce cas le matériau liant du monolithe peut être une argile.

Parmis les zéolithes on citera sans prétendre être exhaustif les produits suivants:
A,KA; A,NaA; A, CaA; X, NaX; SrBaX; AgX ; Y, NaY; KY ; Y, NH4Y; Y,HY; Y, USY; Y; déaluminate; L; Mordénite; Chabazite; Fériérite; Silicalite /ZSM5; Beta; Zéolithe F; Zéolithe W

Parmis les catalyseurs on pourra citer de même:
Les métaux très divisés (ex Cu, Ni, Fe, Ru, Co, Re, Pd,Pt, Ag...) sur différents supports tels l'alumine gamma ou les zéolithes ou d'autres plus inertes, ou les oxydes métalliques (ex $Cr2O3$, $V2O5$...) ; les oxydes acides comme les zéolithes ; les oxydes métalliques supportant des complexes de W, Re, Cr, Ti, ou Zr; les molybdates de Bismuth, antimonate d'Uranium, d'autres oxydes mixtes; des oxydes mixtes de Fe et Mo ; $Fe3O4$ ou des sulfures métalliques ; Co-Mo/gamma-$Al2O2$(sulfuré) ; Ni-Mo/gamma$Al2O3$(sulfuré) ;Ni-W/gamma $Al2O3$ (sulfuré) ;

Le garnissage pourra être avantageusement le support de nouveaux matériaux comme les tamis moléculaires phosphatés (contenant des phosphates) $AlPO_4$, SAPO, des silicates/aluminosilicates mésoporeux, (MCM-41,...) etc...les nanotubes de carbone, les PILCS etc...

Un autre procédé de fabrication du matériau monolithique comprend le formage et l'assemblage de films minces. Cette méthode utilise comme matériau de base des films minces ou des feuilles de matériau. Ce matériau peut être un précurseur de silice amorphe comme une résine silicone.

Le procédé peut être mis en oeuvre en imprimant des conduits par gravure, photogravure, extrusion, emboutissage ou moulage dans une feuille d'un élastomère silicone, et empilement des feuilles ou enroulement en forme du garnissage final souhaité. Un traitement ultérieur par pyrolyse et oxydation transforme le silicone en silice amorphe parcourue par des conduits libres.

La résine silicone peut là encore contenir une charge solide destinée à subsister dans le garnissage final et à lui conférer une fonctionnalité.

On réalise avec ce dernier procédé un garnissage multicapillaire constitué de l'assemblage d'un grand nombre de garnissages multicapillaires élémentaires.

On trouvera des modes opératoires et des sources bibliographiques de procédés de pyrolyse de silicones dans les publications suivantes : « Physical Characteristics of a Porous Silica Material Formed by Pyrolysis of Silicone Rubber », Kew-Ho Lee, Soon-Jai Khang, Ceram. Eng. Sci. Proc., 8 (1-2), pp 85-92, (1987) ; « Silicone Resin Applications for Ceramic Precursor and Composites », M. Narisawa, Materials, 2010, 3, 3518-3536.

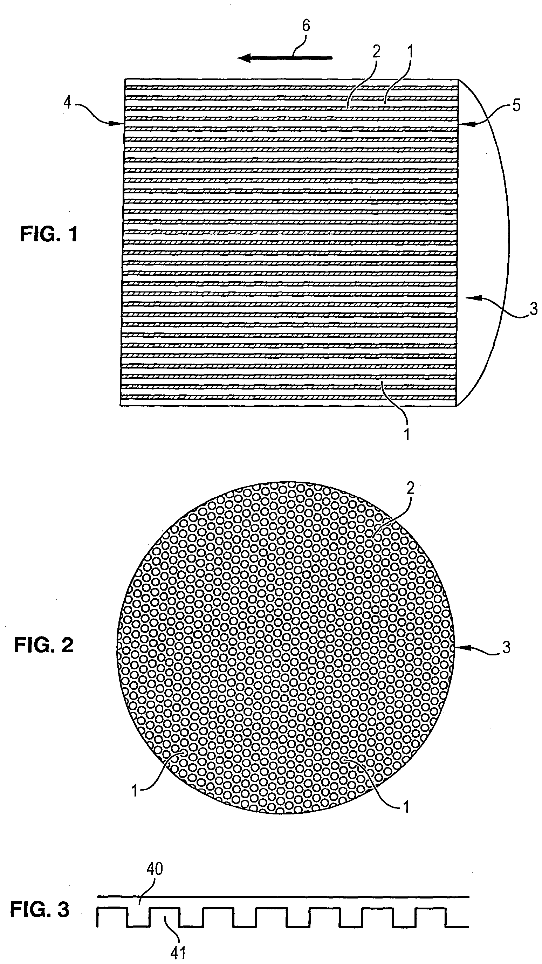

La figure 1 est une vue en coupe d'un garnissage multicapillaire cylindrique 3 pour la chromatographie selon l'invention suivant une direction perpendiculaire à son grand axe.

Il comprend une masse poreuse de silice amorphe 2 et des conduits capillaires vides 1 où le fluide traversant le garnissage 3 peut circuler librement.

Dans le cas décrit, les conduits capillaires sont droits, parallèles, et espacés de façon régulière. Les différents conduits ont des morphologies et diamètres aussi identiques que possible. Chaque conduit traverse le matériau monolithique, c'est-à-dire qu'il a ses extrémités ouvertes de chaque côté 4 et 5 du garnissage cylindrique, permettant la circulation du fluide du côté d'entrée vers le côté de sortie.

Un tel matériau peut donc être utilisé dans une colonne chromatographique.

La figure 2 est une vue de dessus d'une face 5 du garnissage cylindrique vu suivant la direction 6. On distingue les ouvertures des conduits capillaires individuels 1 dans la masse poreuse 2.

La figure 3 est une vue en coupe d'un film d'un élastomère silicone 40 ménageant des canaux 41 transversaux parallèles et perpendiculaires au plan de la figure dont l'empilement ou l'enroulement en forme de cylindre autour d'un axe parallèle aux canaux constitue une préforme du garnissage final.

La préforme est ensuite chauffée et oxydée pour obtenir le garnissage multicapillaire de silice amorphe de haute surface spécifique.

Les figures 4, 5 et 6 sont des schémas de principe d'un chromatographe annulaire continu utilisant un garnissage multicapillaire pour la séparation de deux produits. Le schéma 4 est une coupe de l'appareil suivant selon AA'. Le schéma 5 est une section de l'appareil selon BB' (c'est-à-dire la partie amont du chromatographe), le schéma 6 est une section de l'appareil selon CC' (c'est-à-dire sa partie aval).

Ledit chromatographe annulaire comprend un cylindre d'un garnissage multicapillaire 7 dont les conduits capillaires sont parallèles à son axe principal. Ses deux faces 13 et 16 servent de support aux utilitaires d'entrée et sortie des fluides. Une partie représentative du garnissage 7 apparaît en coupe transversale sur la figure 5.

Cet appareil comprend en outre des utilitaires d'entrée 9, 22, et de sortie 17, 25, 24 et 23 de fluide, qui se présentent sous la forme de secteurs angulaires séparés par des parois verticales qui glissent sur le garnissage à l'aide de joints souples, sans endommager le garnissage, ou positionnés très proches de celui-ci, i.e. à quelques microns ou dizaines de microns de distance sans contact direct et donc sans pièce d'usure, en donnant au joint ou à la plaque séparant deux secteurs une épaisseur suffisante pour que le débit de fuite causé par le jeu soit inférieur au débit évacué vers la face aval par la fraction du garnissage situé sous le joint.

En effet, du fait de la faible perte de charge du garnissage multicapillaire, les différences de pression relatives entre les différents secteurs d'alimentation du chromatographe pourront être relativement grandes et donc être facilement régulées. Il est en effet plus facile de réguler une différence de pression de 0,03 bar entre deux enceintes portées à 0,3 bar relatifs (vis-à-vis de l'atmosphère) que la même différence de pression entre deux enceintes portées à 3 bar relatifs. Or le débit de fuite des fluides d'alimentation et d'élution entre les différents secteurs est directement proportionnel à la racine carrée de la différence de pression entre ces secteurs, et non à la pression absolue qui y règne.

Pour ajuster précisément cette distance, le garnissage est scellé à un cylindre externe, qui est par exemple en un matériau usiné.

Les utilitaires d'entrée et sortie sont fixes les uns par rapport aux autres.

Chaque secteur sur les faces d'entrée et de sortie est en connexion avec un port 10, 12 à l'entrée, 21 à la sortie.

On notera que l'on réalisera facilement des gradients d'élution par paliers en augmentant le nombre de secteurs d'alimentations des différentes qualités d'éluant et du fluides régénératif sur la face amont du garnissage.

Le garnissage cylindrique et ses utilitaires d'entrée et sortie sont en mouvement les uns par rapport aux autres en un mouvement circulaire 18 autour de l'axe OO'. Ce mouvement est imposé au garnissage suivant par un axe de commande 19 par l'intermédiaire d'un axe central 11 auquel est fixé le garnissage.

Le garnissage est en rotation dans une virole 15, 20 étroitement ajustée à son diamètre externe. L'introduction du mélange à séparer par le port 10 et du fluide éluant par le port 12 est effectuée au travers de différents secteurs 9 et 22 de sa surface amont, et la récupération des différentes fractions éluées est de façon similaire effectuée sur différents secteurs de sa surface aval (les secteurs 17 et 24 pour les deux composés séparés et 23 et 21 pour l'éluant).

La constance du temps de séjour de chaque composant dans le garnissage permet de les récupérer à des distances angulaires déterminées du secteur d'alimentation. Le flux continu dans les secteurs d'alimentation produit dans ce cas un flux continu de production dans les secteurs de sortie.

Les chromatographes annulaires continus qui viennent d'être décrits se prêtent particulièrement bien à la chromatographie en phase gazeuse, le gaz vecteur pouvant être refroidi, et recyclé ou recirculé en continu à l'aide d'appareils peu coûteux comme des ventilateurs, sans nécessité de mettre sur le circuit des compresseurs.

Par ailleurs, la continuité des flux évite la nécessité des vannes à gaz à ouverture séquentielles nécessitées par les installations industrielles discontinues.

Enfin, les faibles pressions absolues véhiculées permettent un fonctionnement étanche et facile à réguler de l'ensemble.

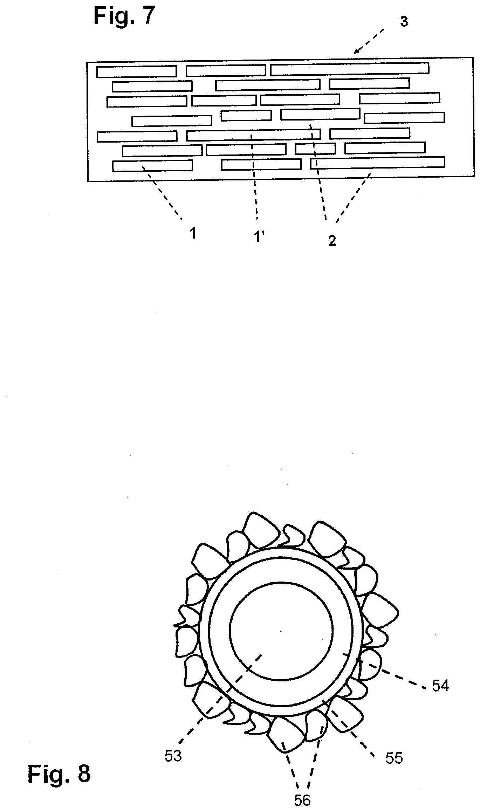

La figure 7 est une vue en coupe d'un garnissage pour la chromatographie suivant une direction paralléle à son grand axe dans lequel les canaux 1, 1' sont immergés dans une masse monolithique poreuse 2 et sont empilés et juxtaposés. Dans ce cas les canaux débouchent de façon ordonnée ou aléatoire dans le matériau 2 perméable à l'éluant. Afin de visualiser cette structure, on pourra considérer que ces canaux peuvent avoir pour précurseur des fibres coupées, empilées et juxtaposées de façon directionnelle de façon à leur conférer une direction moyenne parallèle au sens d'écoulement du fluide dans le garnissage. Avantageusement, les canaux sont de longueurs et de diamètres homogène, et le plus parallèles possible. Avantageusement la longueur totale et cumulative selon laquelle les conduits s'étendent suivant la direction préférentielle d'écoulement du fluide est supérieure ou égale à 10 mm. Par longueur totale et cumulative on entend la longueur totale recouverte par les canaux, dans la direction du flux d'éluant.

La figure 8 est une vue en coupe suivant une direction perpendiculaire à son grand axe d'un exemple d'une fibre précurseur d'un garnissage pour la chromatographie suivant l'invention. Cette fibre peut comprendre une âme 53 en un premier matériau assurant la solidité mécanique de l'ensemble, une couche d'ablation 54 facile à éliminer, une couche de colle 55 et des grains de solide 56 espaceurs adhérents à l'ensemble grâce à la couche de colle 55. Ces grains pourront être de morphologie régulière (sphérique par exemple) ou irrégulière comme sur cette figure. Ils pourront être empilés de façon compacte ou dispersée. Ils pourront être poreux ou non poreux.

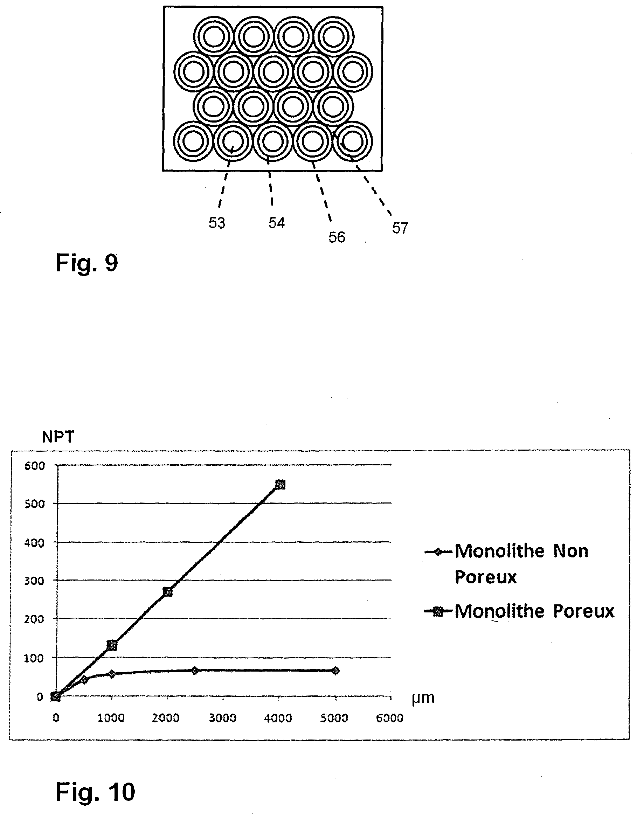

La figure 9 est une vue en coupe suivant une direction perpendiculaire à son grand axe d'un empilement de fibres, d'une façon optimalement ordonnée et compacte, rendues solidaire par l'intermédiaire d'un liant remplissant les interstices ou lumières entre les fibres 57 comme un gel bimodal remplissant la porosité présente entre les grains 56 de solide et entre les fibres 57 et éventuellement le volume poreux des grains du solide 56.

La figure 10 compare les efficacités d'un garnissage multicapillaire vis à vis d'une séparation chromatographique lorsque les parois séparant les capillaires sont poreuses ou non poreuses.

L'axe des abcisses représente la longueur du garnissage exprimée en microns.

L'axe des ordonnées représente l'efficacité du garnissage exprimé en nombre de plateaux théoriques.

Les diamètres des canaux sont répartis suivant une loi de Gauss.

La courbe 1 montre l'efficacité d'un garnissage dont les parois sont non poreuses et dont les capillaires se comportent indépendamment les uns des autres.. Cette efficacité commence par croitre puis plafonne pour tendre vers une limite indépendante de la longueur du garnissage. Ce phénomène est du au fait que les diamètres des capillaires ne sont pas uniformes mais répartis suivant une loi aléatoire gaussienne.

La courbe 2 montre l'efficacité d'un garnissage identique dont les parois sont poreuses et dont les capillaires voisins communiquent par diffusion moléculaire. Dans ce cas l'efficacité ne plafonne plus mais augmente proportionnellement à la longueur du garnissage malgré la même répartition gaussienne des diamètres. La non uniformité de comportement de ces canaux est nivelée par la diffusion moléculaire entre ceux ci.

Ce phénomène est essentiellement pertinent pour un procédé chromatographique, ou de hautes efficacités sont requises. Il est d'importance secondaire pour un procédé d'adsorption ou de catalyse. Il est sans importance pour un procédé de filtration.

Il s'agit d'une découverte constituant un point essentiel de l'invention.

Son intensité dépend de la quantité et des diamètres des pores du matériau constituant les parois. Des micropores de faibles diamètres en grande quantité ralentissent les phénomènes diffusifs entre les canaux et diminuent l'efficacité du garnissage. On s'efforce donc suivant l'invention de limiter leur volume relatif à une fraction du volume poreux total du matériau constituant les parois.

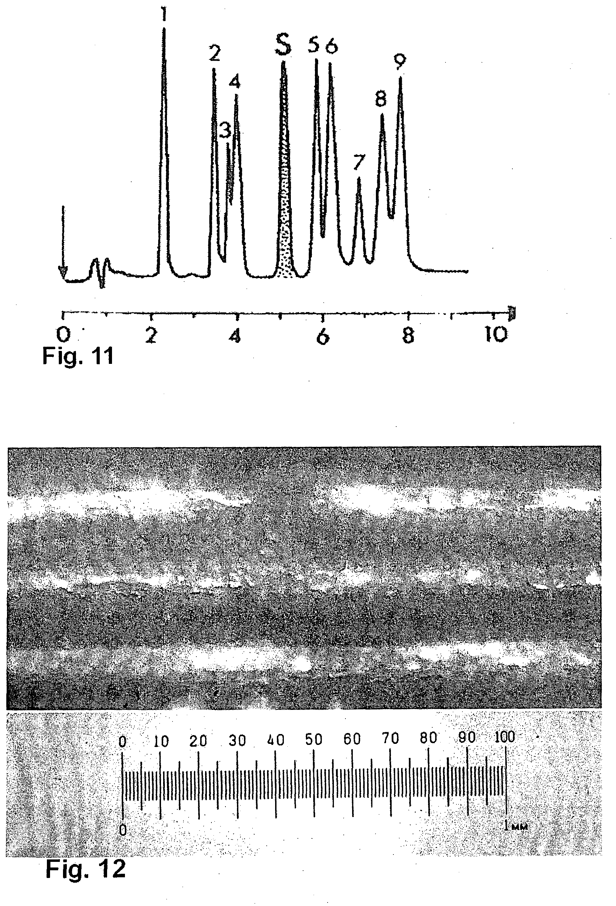

La figure 11 représente un chromatogramme typique issu d'une colonne chromatographique d'une haute efficacité de 30000 plateaux théoriques. Les dix pics successifs sont des composés chimiques élués, isolés et séparés. Il exemplifie l'extrême performance attendue d'une colonne chromatographique en terme de pouvoir séparateur.

La figure 12 montre un garnissage suivant l'invention obtenu suivant l'exemple 1, fracturé de façon a en visualiser l'intérieur. Il montre la régularité en taille de canaux et en épaisseur de paroi atteinte par le procédé suivant l'invention.

Les structures et appareils (CAC) décrits dans ce mémoire pourront être utilisés dans tous les domaines de la chimie et du génie chimique. Leurs applications potentielles recouvrent en particulier dans le domaine industriel:

- la séparation des isomères n/iso des paraffines.
- la séparation des isomères n-iso des oléfines en C4
- la séparation des para-meta-ortho xylènes
- la séparation de l'éthylbenzene des xylènes

Dans le domaine de la chimie analytique :

- la chromatographie analytique en phase gaz, gaz-liquide ou gaz-solide
- la chromatographie analytique en phase liquide liquide-liquide ou liquide-solide
- la chromatographie analytique en phase supercritique

En particulier dans le domaine de la chromatographie en phase liquide :

- la chromatographie de partage sur phases stationnaires greffées et polymères non ioniques.
- la chromatographie d'échange d'ion
- la chromatographie ionique
- la chromatographie de paires d'ions
- la chromatographie d'échanges de ligandes
- la chromatographie de complexes donneurs-accepteurs d'électrons
- la chromatographie d'exclusion stérique
- toutes les variantes de la chromatographie d'affinité

## EXEMPLES

Exemple 1 : Fabrication d'un garnissage multicapillaire en silice par un procédé sol gel.

Dans ce mode de réalisation, les fibres sont constituées d'un polymère hydrolysable, et assemblées en faisceau.

Le faisceau est immergé dans une solution précurseur d'un gel de silice, solution dont on provoque le gel autour des fibres, puis les fibres sont éliminées par hydrolyse en espèces solubles de faible poids moléculaire.

Un monofilament de Caprosyn Tyco Healthcare grade 5 (d'environ 150 μm de diamètre externe) est trempé dans une solution aqueuse contenant 10% d'un alcool polyvinylique et 15 % en poids de microbilles de verre de diamètres compris entre 0 et 40 μm fournis par la firme Potters Ballotini. Le monofilament est ensuite séché. De cette façon l'extérieur du filament de Caprosyn est recouvert de microbilles de verres qui servent d'espaceurs, adhérentes à sa surface par l'action du PVA qui sert de colle.

Un faisceau est fabriqué en assemblant 9 de ces fibres latéralement et jointivement en une section rectangulaire de 2000 μm sur 250 μm de côté et de 20 mm de long. Le faisceau est réalisé dans un canal rectangulaire des dimensions précitées, la profondeur étant égale à 250 μm, creusé dans bloc d'alliage hastelloy de 20mm x 20mm x 10mm.

Le faisceau de fibres de Caprosyn est imprégné avec une mixture de Ludox TM50 (Marque Grace, sol de particules de silice amorphe de 22 nm de diamètre, de surface spécifique de 140 m2/g, 50% en poids de silice contenue) et d'acide chlorhydrique 37% en proportions adéquates pour l'obtention d'une solution à 3% en poids d'acide chlorhydrique par rapport à l'eau. Le liquide doit remplir la totalité du garnissage, qui doit s'y trouver immergé. Le garnissage est fermé par une feuille supérieure plane de Teflon, ou couvercle, de dimensions identiques au moule en hastelloy. On dépose sur une face plane du couvercle en Teflon une solution d'acide polyglycolique ou polyglycolide dans l'hexafluoroisopropanol (HFIP) de façon à laisser sur cette face, après séchage une épaisseur de polyglycolide de 5 micromètres environ. Le couvercle est vissé sur le bloc d'Hastelloy, face recouverte par le polyglycolide contre le garnissage.

L'assemblage est porté à 100°C au dessus d'un bain marie.

Le sol gèle très rapidement dans ces conditions, en 10 mn à une heure. Il produit un garnissage non renforcé moulé autour des fibres.

Chaque extrémité du faisceau dépassant des feuilles de Téflon est découpée avec une lame très fine de façon à libérer la section des conduits.

Le dispositif est laissé à réagir 48 heures à la température de 100°C dans un bain de vapeur d'eau de façon à dissoudre les fibres par hydrolyse.

Le garnissage est ensuite ouvert en ôtant son couvercle.

L'ensemble est porté à 105 °C durant 24 heures.

La température est finalement portée à 550°C durant 2 heures, sous atmosphère d'air

puis le garnissage est refroidi à l'ambiante.

Exemple 2 : Fabrication d'un garnissage multicapillaire en un composite silice-zéolithe.

Le matériau de départ est un fil en un alliage d'étain et de plomb en proportions 60%, 40% respectivement. Il a 7/10 de mm de diamètre. Le fil est coupé en aiguilles rectilignes de 15 cm de long, Un élastomére silicone liquide bicomposant de type RTV est mélangé à son activateur de polymérisation et à 20% en volume de silice pour chromatographie de granulométrie 10 μm. Les aiguilles sont enduites de ce mélange par trempage. Les aiguilles sont vulcanisées 24 heures à température ambiante. Elles sont ensuite coupées en longueurs de 100 mm et assemblées en un faisceau de 14 mm de diamètre environ dans un tube de verre de 80 mm de long et 18 mm de diamètre intérieur.

Un élastomére silicone liquide bicomposant de type RTV mélangé à son activateur de polymérisation sont ensuite coulés dans le tube par les interstices des aiguilles de façon à remplir totalement cet espace vide. La résine est polymérisée durant 24 heures à température ambiante.

Le composite ainsi réalisé est libéré en sectionnant les aiguilles sur 10 mm de longueur de part et d'autre du tube de verre au ras de ses extrémités, perpendiculairement aux aiguilles.

Le faisceau est porté à 210°C, jusqu'à fusion des aiguilles, et le métal fondu est facilement éliminé par une légère circulation d'air sous pression.

Le garnissage est libéré de son enveloppe de verre et pyrolysé graduellement sous courant d'oxygène pur jusqu'à 550°C, puis durant deux heures à cette température.

Exemple 3 : Fabrication d'un garnissage multicapillaire en un composite kaolinite zéolithe Y.

Le matériau de départ est un fil en un alliage d'étain et de plomb en proportions 60%, 40% respectivement. Il a 7/10 de mm de diamètre. Le fil est coupé en aiguilles rectilignes de 15 cm de long, recouvertes par trempage d'une couche de 10 micromètres d'épaisseur d'une paraffine fondant à 82 °C, puis d'une fine couche d'une mixture de 85% en poids de zéolithe NaX , de 15% de kaolinite (sur la base d'un poids mesuré après déssication) et d'un tensio actif destiné à faciliter le mouillage de l'aiguille dans une quantité d'eau déminéralisée juste suffisante pour fluidifier le milieu. Les aiguilles sont disposées et séchées 24 heures près d'une source de chaleur (50°C). Elles sont ensuite coupées en longueurs de 100 mm et assemblées en un faisceau de 14 mm de diamètre environ dans un tube de téflon de 80 mm de long et 18 mm de diamètre intérieur conditionné en deux demi coques jointives longitudinalement rendues temporairement solidaire .

Un sol Ludox TM50 dilué à 20% en poids de solide acidifié est ensuite rapidement coulé dans le tube par les interstices des aiguilles de façon à remplir totalement cet espace vide. Le sol est gelé en portant l'ensemble à 80°C durant 48 h.

Le composite ainsi réalisé est libéré en sectionnant les aiguilles sur 10 mm de longueur de part et d'autre du tube de verre au ras de ses extrémités, perpendiculairement aux aiguilles. La demi coque supérieure est enlevée et le module est séché à 75° dans une étuve ventilée.

Le faisceau est porté dans une étuve à 210°C, jusqu'à fusion des aiguilles, et le métal fondu est facilement éliminé par une légère circulation d'air sous pression.

Le garnissage est cuit sous atmosphère d'air en augmentant sa température jusqu'à 550°C à raison d'un degré par mn, puis durant deux heures à cette température..

Exemple 4 : Fabrication d'un garnissage multicapillaire en un composite kaolinite zéolithe X.

Le matériau de départ est un fil en polypropylène de 150 $\mu$m de diamètre est recouvert par trempage d'une couche d'une dilution de 85% en poids de zéolithe NaX, de 15% de kaolinite (sur la base d'un poids mesuré après déssication) et d'un tensio actif destiné à faciliter le mouillage de la fibre, dans une quantité d'eau déminéralisée juste suffisante pour fluidifier le milieu.

Le fil est séché par passage rapide sous un flux d'air chaud à 80°C de façon à lui conserver une humidité élevée tout en le rendant manipulable.

Le fil est bobiné dans un canal en acier inoxydable rectangulaire de 5 mm de large sur 8 mm de profondeur et 100 mm de long.

Le faisceau ainsi obtenu est compacté par une presse précisément encastrée dans le canal et suivant sa profondeur de manière à éliminer les interstices ou lumières laissés libre entre les fibres. Le composite ainsi réalisé est libéré en sectionnant les fils de part et d'autre du canal d'inox au ras de ses extrémités,

Le garnissage est séché à 105 °C durant deux heures.

Le garnissage est cuit sous atmosphère d'azote jusqu'à 550°C à raison d'un degré par mn, puis durant deux heures à cette température.

Exemple 5

Dans cette variante, des fibres polymériques précurseurs des conduits sont assemblées en faisceau, le faisceau est immergé dans une solution précurseur d'un gel de silice, solution dont on provoque le gel autour des fibres, puis les fibres sont éliminées par pyrolyse et combustion. Le gel de silice peut être renforcé par dépôt de silice à la surface des particules le constituant avant son séchage.

Un monofilament de polypropylène (d'environ 150 $\mu$m de diamètre externe) est trempé dans une solution aqueuse contenant 10% d'un alcool polyvinylique et 15 % en poids de microbilles de verre de diamètres compris entre 0 et 40 $\mu$m fournis par la firme Potters Ballotini. Le monofilament est ensuite séché. De cette façon, l'extérieur du filament de polypropylène est recouvert de microbilles de verres qui servent d'espaceurs, adhérentes à sa surface par l'action du PVA qui sert de colle.

Un faisceau est fabriqué en assemblant ces filaments en un faisceau de section rectangulaire de 1700 $\mu$m de largeur, de 250 $\mu$m de profondeur et de 100 mm de long. Ce faisceau est créé par enroulement dans un tel canal, canal précisément usiné dans une feuille d'acier inoxydable 316 L de 100 mm x 20 mm x 10 mm. Le faisceau de fibres de polypropylène est imprégné par un mélange de 24,3 g de tetramethylsiloxane, et de 57,6 ml d'une solution d'ammoniaque à 1% dans l'eau. Le liquide doit totalement mouiller et remplir le garnissage.

Le garnissage est refermé par un couvercle supérieur constitué d'une feuille d'acier inoxydable plane de dimensions identiques à celles de la feuille d'acier de base, vissée sur celle-ci, sur laquelle est préalablement déposée une épaisseur de 5 micromètre environ d'une paraffine fondant à 62 °C..

Le mélange est laissé à polymériser et geler durant 24 heures à 42 °C.

Les deux extrémités du garnissage sont coupées au ras de la feuille d'acier de façon à libérer la section du garnissage.

Le garnissage a une longueur de 100 mm.

Le garnissage et son enveloppe sont portés à 90°C.

Le couvercle est enlevé et le garnissage est séché sous air sec à la température de 105°C durant 2 heures.

Le produit résultant est chauffé jusqu'à 650°C dans une atmosphère d'azote à une vitesse de 100°C par heure à partir de la température ambiante pour le convertir en garnissage multicapillaire en brûlant les fibres polymériques.

Une fois refroidi, le garnissage est clôt de nouveau sur sa partie supérieure par une feuille plane d'acier inoxydable des mêmes dimensions, ou couvercle, vissée sur celle contenant le garnissage.

On notera que dans tous les exemples fournis ci dessus les pourcentages sont des pourcentages pondéraux.

**Revendications**

1. Garnissage pour une colonne chromatographique, comprenant un matériau poreux monolithique basé sur un aluminosilicate et comprenant des conduits capillaires substantiellement rectilignes et parallèles entre eux, **caractérisé en ce que** :

   - lesdits conduits présentent une section substantiellement uniforme les uns par rapport aux autres, c'est-à-dire que le diamètre moyen d'un conduit ne diffère pas en moyenne de plus de 30% de la moyenne des diamètres des conduits,
   - la section de chaque conduit est régulière sur toute sa longueur, le diamètre d'un conduit ne variant pas de plus d'un facteur 2 entre les zones les plus étroites et les zones les plus larges,
   - lesdits conduits traversent le matériau de part en part,
   - lesdits conduits présentent un diamètre inférieur à 0,25 mm,
   - le volume des micropores inférieures à 0,3 nm est inférieur à 50% du volume poreux total du matériau mesuré en excluant le volume des conduits.

2. Garnissage selon la revendication 1 **caractérisé en ce que** la longueur totale et cumulative selon laquelle les conduits s'étendent suivant une direction préférentielle d'écoulement d'un fluide est supérieure ou égale à 10 mm.

3. Garnissage selon la revendication 1 ou 2 **caractérisé en ce que** l'épaisseur de la paroi entre deux conduits adjacents, dans sa partie la plus fine, est inférieure à la moitié de leur diamètre.

4. Garnissage selon la revendication 1 **caractérisé en ce que** le matériau poreux monolithique est constitué d'une argile.

5. Garnissage selon l'une quelconque des revendications 1 à 4, **caractérisé en ce que** les conduits capillaires présentent un diamètre inférieur à 0,1 mm.

6. Garnissage selon l'une quelconque des revendications précédentes, **caractérisé en ce que** le matériau poreux monolithique contient ou supporte un tiers corps solide.

7. Garnissage selon la revendication 6 **caractérisé en ce que** le tiers corps solide est une zéolithe.

8. Appareil de chromatographie annulaire continue axiale ou radiale comprenant un garnissage selon l'une quelconque des revendications 1 à 7.

9. Procédé pour la réalisation d'un garnissage selon l'une quelconque des revendications 1 à 7 comprenant un matériau poreux monolithique basé sur un aluminosilicate et comprenant des conduits capillaires rectilignes et parallèles entre eux, **caractérisé en ce qu'**il comprend les étapes de :

   - fourniture d'un faisceau de fibres dites précurseurs des conduits dont le diamètre est égal à celui des conduits capillaires,
   - formation d'une matrice autour des fibres, basée sur un aluminosilicate, le volume des micropores inférieures à 0,3 nm étant inférieur à 50% du volume poreux total du matériau mesuré en excluant le volume des conduits,
   - élimination des fibres de façon à former, dans ladite matrice, lesdits conduits capillaires.

10. Procédé selon la revendication 9 **caractérisé en ce que** l'élimination des fibres est réalisée au travers des lumières ou interstices laissés libres entre les fibres du faisceau juxtaposées.

11. Procédé selon la revendication 9 **caractérisé en ce que** la formation d'une matrice poreuse de solide minéral autour des fibres est assurée par un procédé sol gel.

12. Procédé selon l'une quelconque des revendications 9 à 11, **caractérisé en ce que** le matériau est renforcé par dépôt de silice à la surface des particules le constituant avant séchage.

**13.** Procédé de réalisation d'un garnissage suivant la revendication 9 **caractérisé en ce qu'**il comprend les étapes de :

- formation d'une matrice de silicone réticulé comportant une charge d'un aluminosilicate autour des fibres,
- pyrolyse du silicone de façon à laisser un résidu de silice amorphe liant les particules de la charge.

**Patentansprüche**

**1.** Packung für eine Chromatographiesäule, die ein auf einem Aluminosilikat basierendes poröses monolithisches Material umfasst, und die im Wesentlichen gerade und zueinander parallele Kapillarleitungen umfasst, **dadurch gekennzeichnet, dass**:

- die Leitungen in Bezug zueinander einen im Wesentlichen einheitlichen Querschnitt aufweisen, das heißt, dass der mittlere Durchmesser einer Leitung im Mittel um nicht mehr als 30 % vom Mittel der Durchmesser der Leitungen abweicht,
- der Querschnitt jeder Leitung auf ihrer gesamten Länge regelmäßig ist, wobei der Durchmesser einer Leitung um nicht mehr als einen Faktor 2 zwischen den engsten Stellen und den breitesten Stellen schwankt,
- die Leitungen von einer Seite zur anderen durch das Material hindurchgehen,
- die Leitungen einen Durchmesser von kleiner als 0,25 mm aufweisen,
- das Volumen der Mikroporen, die kleiner als 0,3 nm sind, unter Ausschluss des Volumens der Leitungen gemessen kleiner als 50 % des Gesamtporenvolumens des Materials ist.

**2.** Packung nach Anspruch 1, **dadurch gekennzeichnet, dass** die Gesamt- und kumulative Länge, der entlang sich die Leitungen einer bevorzugten Strömungsrichtung eines Fluides folgend erstrecken, größer als oder gleich 10 mm ist.

**3.** Packung nach Anspruch 1 oder 2, **dadurch gekennzeichnet, dass** die Dicke der Wand zwischen zwei benachbarten Leitungen in ihrem dünnsten Teil kleiner als die Hälfte deren Durchmessers ist.

**4.** Packung nach Anspruch 1, **dadurch gekennzeichnet, dass** das poröse monolithische Material aus einem Ton besteht.

**5.** Packung nach einem der Ansprüche 1 bis 4, **dadurch gekennzeichnet, dass** die Kapillarleitungen einen Durchmesser von kleiner als 0,1 mm aufweisen.

**6.** Packung nach einem der vorstehenden Ansprüche, **dadurch gekennzeichnet, dass** das poröse monolithische Material einen dritten Festkörper enthält oder trägt.

**7.** Packung nach Anspruch 6, **dadurch gekennzeichnet, dass** der dritte Festkörper ein Zeolith ist.

**8.** Gerät zur kontinuierlichen axialen oder radialen annularen Chromatographie, das eine Packung nach einem der Ansprüche 1 bis 7 umfasst.

**9.** Verfahren zum Ausführen einer Packung nach einem der Ansprüche 1 bis 7, die ein auf einem Aluminosilikat basierendes poröses monolithisches Material umfasst, und die gerade und zueinander parallele Kapillarleitungen umfasst, **dadurch gekennzeichnet, dass** es die Schritte umfasst des:

- Bereitstellens eines Bündels von Fasern, die als Vorläufer der Leitungen bezeichnet werden, deren Durchmesser gleich demjenigen der Kapillarleitungen ist,
- Bildens einer auf einem Aluminosilikat basierenden Matrix um die Fasern herum, wobei das Volumen der Mikroporen, die kleiner als 0,3 nm sind, unter Ausschluss des Volumens der Leitungen gemessen kleiner als 50 % des Gesamtporenvolumens des Materials ist,
- Entfernens der Fasern, um die Kapillarleitungen in der Matrix zu bilden.

**10.** Verfahren nach Anspruch 9, **dadurch gekennzeichnet, dass** das Entfernen der Fasern über die Hohlräume oder Zwischenräume ausgeführt wird, die zwischen den nebeneinanderliegenden Fasern des Bündels freigelassen werden.

**11.** Verfahren nach Anspruch 9, **dadurch gekennzeichnet, dass** die Bildung einer porösen Matrix aus mineralischem Feststoff um die Fasern herum über ein Sol-Gel-Verfahren sichergestellt wird.

**12.** Verfahren nach einem der Ansprüche 9 bis 11, **dadurch gekennzeichnet, dass** das Material vor Trocknen durch Abscheiden von Siliziumdioxid an der Oberfläche der Teilchen, aus denen es besteht, verstärkt wird.

**13.** Verfahren zum Ausführen einer Packung nach Anspruch 9, **dadurch gekennzeichnet, dass** es die Schritte umfasst des:

- Bildens einer vernetzten Silikonmatrix, die eine Füllung aus einem Aluminosilikat umfasst, um die Fasern herum,
- Pyrolysierens des Silikons, um einen Rückstand aus amorphen Siliziumdioxid zurückzulassen, der die Teilchen der Füllung verbindet.

**Claims**

**1.** Packing for a chromatographic column, comprising a monolithic porous material based on an aluminosilicate and comprising substantially rectilinear capillary channels parallel to one another, **characterised in that**:

- said channels have a substantially uniform cross-section relative to each other, i.e. the mean diameter of one channel does not on average differ by more than 30% from the average of the diameters of the channels,
- the cross-section of each channel is regular over its entire length, the diameter of a channel not varying by a factor of more than 2 between the narrowest regions and the widest regions,
- said channels pass right through the material from end to end,
- said channels pass have a diameter less than 0.25 mm,
- the volume of the micropores of less than 0.3 nm is less than 50% of the total porous volume of the material measured by excluding the volume of the channels.

**2.** Packing according to claim 1 **characterised in that** the total cumulative length along which extend the conduits along a preferential direction of flow of a fluid is greater than or equal to 10 mm.

**3.** Packing according to claim 1 or 2, **characterised in that** the thickness of the wall between two adjacent channels, in its narrowest part, is less than one half of their diameter.

**4.** Packing according to claim 1, **characterised in that** the monolithic porous material is comprised of a clay.

**5.** Packing according to any of claims 1 to 4, **characterised in that** the capillary channels have an inner diameter of less than 0.1 mm.

**6.** Packing according to any of the preceding claims, **characterised in that** the monolithic porous material contains or supports a third party solid body.

**7.** Packing according to claim 6, **characterised in that** the third-party solid body is a zeolite.

**8.** Axial or radial continuous annular chromatographic apparatus comprising a packing according to any of claims 1 to 7.

**9.** Process for preparing a packing according to any of claims 1 to 7 comprising a monolithic porous material substantially based on an aluminosilicate and comprising rectilinear capillary channels parallel to one another, **characterised in that** it comprises the steps of:

- providing a bundle of so-called channel precursor fibres for which the diameter is equal to that of the capillary channels,
- forming a matrix around the fibres, based on an aluminosilicate, the volume of the micropores of less than 0.3 nm being less than 50% of the total porous volume of the material measured by excluding the volume of the channels,
- eliminating the fibres so as to form said capillary channels in said matrix.

**10.** Process according to claim 9 **characterised in that** removal of the fibres is achieved through lumens or interstices left free between the juxtaposed fibres of the bundle.

11. Process according to claim 9 **characterised in that** the formation of a porous matrix of mineral solid around the fibres is ensured by a sol gel method.

12. Process according to any of claims 9 to 11, **characterised in that** the material is reinforced by depositing silica at the surface of the particles making it up before drying.

13. Process for preparing a packing according to claim 9 **characterised in that** it comprises the steps of:

- forming a crosslinked silicone matrix including a load of aluminosilicate around fibres,
- pyrolysing the silicone so as to leave an amorphous silica residue binding the particles of the load.

**FIG. 1**

**FIG. 2**

**FIG. 3**

# FIG. 4

# FIG. 5

# FIG. 6

**Fig. 7**

**Fig. 8**

53    54    56    57

## Fig. 9

NPT

- Monolithe Non Poreux
- Monolithe Poreux

μm

## Fig. 10

Fig. 11

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5332480 A, Datta et Beardsley
- US 4657742 A, Beaver P.
- US 4957620 A, Cussler E.
- US 4818264 A
- US 20050139536 A, Belov Y.P.
- US 6210570 B, Holloway R.
- WO 0147637 A, Faber
- US 20060090649 A, Wei Liu
- WO 9528279 A, Purushottam
- FR 2957276
- US 5234594 A
- US 5864743 A, Tuchinsky
- US 20050023204 A, Nakanishi

**Littérature non-brevet citée dans la description**

- **V.N SIDELNIKOV et al.** *Catalysis in Industry,* 2012, vol. 2 (3), 206, , 216
- **NISHIHARA H.** Ordered macroporous silica by ice templating. *Chemistry of Materials,* 28 Février 2005, 683-689
- **MUKAI S. R.** Formation of monolithic silica gel microhoneycomb (SMH's) using pseudo steady state growth of microstructural ice crystals. *Chemical Communications,* 04 Mars 2004, 874-875
- **N, ISHIZUKA.** Designing monolithic double pore silica for high speed liquid chromatography. *Journal of Chromatography,* 1998, vol. A (797), 133-137
- **K NAKANISHI.** Phase séparation in silica sol-gel system containing polyacrylic acid. *Journal of non crystalline Solids,* 1992, vol. 139, 1-13, 14-24
- **K. NAKANISHI.** Phase séparation in Gelling Silica-Organic Polymer Solution: Systems Containing Poly(sodium styrenesulfonate). *J. Am. Ceram. Soc.,* 1991, vol. 74 (10), 2518-2530, 30
- **R. ROSSET ; M. CAUDE ; A JARDY.** Chromatographies en phases liquide et supercritique. 1991, 224-226
- **D. SANCHEZ.** Silica-based packing materials for PREP HPLC, SFC and SMB. *Analusis magazine,* 1998, vol. 26 (7
- **B. E. YOLDAS.** Alumina gels that form porous transparent Al2O3. *Journal of Materials Science,* 1975, vol. 10, 1856-1860
- **KEW-HO LEE ; SOON-JAI KHANG.** Physical Characteristics of a Porous Silica Material Formed by Pyrolysis of Silicone Rubber. *Ceram. Eng. Sci. Proc.,* 1987, vol. 8 (1-2), 85-92
- **M. NARISAWA.** Silicone Resin Applications for Ceramic Precursor and Composites. *Materials,* 2010, vol. 3, 3518-3536